# EUROPEAN PATENT APPLICATION

(11) **EP 4 653 120 A1**
(43) Date of publication of application: **26.11.2025**
(21) Application number: 23917780.1
(22) Date of filing: 27.12.2023
(51) Int. Cl.: B23K 26/00, B23K 26/03, B23K 26/38

(54) **MACHINABILITY DETERMINATION DEVICE, MACHINABILITY DETERMINATION METHOD, AND MACHINABILITY DETERMINATION PROGRAM**

(30) Priority: 19.01.2023 JP 2023006493; 16.10.2023 JP 2023178228
(71) Applicant: Amada Co., Ltd., Isehara-shi, Kanagawa 259-1196 (JP)
(72) Inventor: HARA, Hideo, Isehara-shi, Kanagawa 259-1196 (JP); NISHIDA, Junichi, Isehara-shi, Kanagawa 259-1196 (JP); ITO, Masahito, Isehara-shi, Kanagawa 259-1196 (JP); SATO, Haruya, Isehara-shi, Kanagawa 259-1196 (JP); WAKUI, Hirotada, Isehara-shi, Kanagawa 259-1196 (JP)
(74) Representative: Grünecker Patent- und Rechtsanwälte PartG mbB
(86) International application number: PCT/JP2023/047041
(87) International publication number: WO 2024/154570

(57) **Abstract**

A processability determination device includes a laser processing unit configured to irradiate a workpiece with laser beams under determination irradiation conditions that do not exceed a melting point of a raw material of the workpiece in a processability determination process, a measurement unit configured to measure infrared ray intensity of radiation light generated when the workpiece is irradiated with the laser beams, a feature extraction unit configured to extract feature information indicating a temporal or positional change in a temperature of the workpiece on the basis of time-series data of the measured infrared ray intensity, a determination unit configured to determine processability of the workpiece when the workpiece is processed under preset processing conditions by the laser processing unit on the basis of the extracted feature information and reference information for determining the processability of the workpiece that has been pre-recorded, and a reporting unit configured to report the determined determination result.

## Description

### Technical Field

The present invention relates to a processability determination device, a processability determination method, and a processability determination program.

### Background Art

In a conventional laser processing device such as a laser processing machine, processing conditions are generally preset according to the material and thickness of a workpiece. Accordingly, an operator of the laser processing device performs laser processing by selecting processing conditions that are suited to the material and thickness of the workpiece, or under processing conditions instructed by a processing program.

However, even when workpieces are each made of a material with the same name and each have the same thickness, the processing conditions themselves prepared thereto in advance for the laser processing device may fail to provide good processing quality for the workpieces depending on individual differences in manufacturing country, manufacturer, manufacturing lot, storage conditions, and the like. In addition, various materials such as stainless steel and an aluminum alloy have been developed according to various applications, and therefore, the processing conditions themselves for a general-purpose material prepared in advance for the laser processing device may fail to provide good processing quality for the workpieces depending on the amount of alloy element that constitutes the material, the manufacturing process, and the like.

To address this problem, a technique has been known in which a detection unit provided inside a laser processing head detects returned light from a processed point side including a processed point and its vicinity during processing, generated upon receipt of laser beam irradiation, and a monitoring unit extracts a time-series level of light in a specific wavelength band according to the processing conditions to monitor a processing state (see Patent Literature 1). On the other hand, a technique has also been known in which, after processing conditions suited to the material and thickness of a workpiece are selected, the actual material and thickness of the workpiece are measured, and then the selected processing conditions are modified according to the measurement results (see Patent Literature 2).

### Citation List

### Patent Literature

Patent Literature 1: Japanese Patent Application Laid-Open Publication No. 2019-166543
Patent Literature 2: Japanese Patent No. 6754614

### Summary

### Technical Problem

However, in the above-described device disclosed in Patent Literature 1, the processing state of actual laser processing can be determined under various processing conditions, but it is not assumed that the processing conditions are modified on the basis of the determination result. On the other hand, in the above-described device disclosed in Patent Literature 2, the processing conditions that have been selected according to the material and thickness of the workpiece can be modified on the basis of the actually measured material and thickness, but it is not assumed that the determination as to what level of processing quality would be obtained is made if the selected processing conditions are not modified.

That is, the conventional techniques described above are not adapted to determine, before the actual processing, the processability (degree of suitability for processing) itself of the workpiece based on the processing conditions according to the determined processing state and the selected processing conditions in correspondence with the individual differences (variations in quality) in the actual workpieces, which are different for each manufacturer, for each manufacturing lot, or for each storage condition, for example.

Consequently, there is a problem in that it is impossible for an operator to make determination without test processing (trial processing), such as to determine the processability based on the processing conditions of a workpiece before processing and to, on the basis of that determination result, further determine whether to perform the processing under the preset processing conditions, whether to change the processing conditions to suit to the workpiece, or the like.

One aspect of the present invention is a processability determination device, a processability determination method, and a processability determination program in which processability based on processing conditions of a workpiece is determined before processing, and a determination result is reported, thereby making it possible to facilitate operator's determination based on the determination result, resulting in a reduction in processing defects.

### Solution to Problem

A processability determination device according to one aspect of the present invention includes a laser processing unit capable of executing a processing process of irradiating a workpiece with laser beams under processing irradiation conditions to process the workpiece, and a processability determination process of irradiating the workpiece with the laser beams under determination irradiation conditions that do not exceed a melting point of a raw material of the workpiece to determine processability of the workpiece, a measurement unit configured to measure infrared ray intensity of radiation light generated when the workpiece is irradiated with the laser beams under the determination irradiation conditions, a feature extraction unit configured to extract feature information indicating a temporal or positional change in a temperature of the workpiece on the basis of time-series data of the infrared ray intensity measured by the measurement unit, a determination unit configured to determine the processability of the workpiece when the workpiece is processed under preset processing conditions by the laser processing unit on the basis of the extracted feature information and reference information for determining the processability of the workpiece that has been pre-recorded, and a reporting unit configured to report a determination result determined by the determination unit.

A processability determination method according to one aspect of the present invention includes irradiating, by a laser processing unit, a workpiece with laser beams under determination irradiation conditions that do not exceed a melting point of a raw material of the workpiece, measuring, by a measurement unit, infrared ray intensity of radiation light generated when the workpiece is irradiated with the laser beams under the determination irradiation conditions, extracting, by a feature extraction unit, feature information indicating a temporal or positional change in a temperature of the workpiece on the basis of time-series data of the infrared ray intensity measured by the measurement unit before processing the workpiece, determining, by a determination unit, processability of the workpiece when the workpiece is processed under preset processing conditions by the laser processing unit on the basis of the extracted feature information and reference information for determining the processability of the workpiece that has been pre-recorded, and reporting, by a reporting unit, a determination result determined by the determination unit.

A processability determination program according to one aspect of the present invention causes a computer to execute irradiating, by a laser processing unit, a workpiece with laser beams under determination irradiation conditions that do not exceed a melting point of a raw material of the workpiece, measuring, by a measurement unit, infrared ray intensity of radiation light generated when the workpiece is irradiated with the laser beams under the determination irradiation conditions, extracting, by a feature extraction unit, feature information indicating a temporal or positional change in a temperature of the workpiece on the basis of time-series data of the infrared ray intensity measured by the measurement unit before processing the workpiece, determining, by a determination unit, processability of the workpiece when the workpiece is processed under preset processing conditions by the laser processing unit on the basis of the extracted feature information and reference information for determining the processability of the workpiece that has been pre-recorded, and reporting, by a reporting unit, a determination result determined by the determination unit.

According to the processability determination device, the processability determination method, and the processability determination program according to one aspect of the present invention, feature information indicating a temporal or positional change in a temperature of a workpiece is extracted on the basis of time-series data of infrared ray intensity of radiation light generated when the workpiece is irradiated with laser beams by a laser processing unit under determination irradiation conditions that do not exceed a melting point of a raw material, processability of the workpiece when the workpiece is processed under preset processing conditions by the laser processing unit is determined on the basis of the extracted feature information and reference information for determining the processability of the workpiece that has been pre-recorded, and a determination result is reported. This makes it possible to, for example, determine the processability based on the processing conditions of the workpiece before processing and report the determination result, thereby facilitating operator's determination based on the result of the determination as to whether the actual processing should be performed under the preset processing conditions, whether the processing conditions should be changed to be suited to the workpiece, or the like, resulting in a reduction in processing defects.

A processability determination device according to another aspect of the present invention includes a laser processing unit capable of executing a processing process of irradiating a workpiece with laser beams under processing irradiation conditions to process the workpiece, and a processability determination process of irradiating the workpiece with the laser beams under determination irradiation conditions that the laser beams do not penetrate a raw material of the workpiece to determine processability of the workpiece, a measurement unit configured to measure infrared ray intensity of radiation light generated when the workpiece is irradiated with the laser beams under the determination irradiation conditions, a feature extraction unit configured to extract feature information indicating temporal changes in temperature of the workpiece on the basis of time-series data of the infrared ray intensity measured by the measurement unit, a determination unit configured to determine the processability of the workpiece when the workpiece is processed under preset processing conditions by the laser processing unit on the basis of the extracted feature information and reference information for determining the processability of the workpiece that has been pre-recorded, and a reporting unit configured to report a determination result determined by the determination unit.

A processability determination method according to another aspect of the present invention includes irradiating, by a laser processing unit, a workpiece with laser beams under determination irradiation conditions that the laser beams do not penetrate a raw material of the workpiece, measuring, by a measurement unit, infrared ray intensity of radiation light generated when the workpiece is irradiated with the laser beams under the determination irradiation conditions, extracting, by a feature extraction unit, feature information indicating temporal changes in temperature of the workpiece on the basis of time-series data of the infrared ray intensity measured by the measurement unit before processing the workpiece, determining, by a determination unit, processability of the workpiece when the workpiece is processed under preset processing conditions by the laser processing unit on the basis of the extracted feature information and reference information for determining the processability of the workpiece that has been pre-recorded, and reporting, by a reporting unit, a determination result determined by the determination unit.

A processability determination program according to another aspect of the present invention causes a computer to execute irradiating, by a laser processing unit, a workpiece with laser beams under determination irradiation conditions that the laser beams do not penetrate a raw material of the workpiece, measuring, by a measurement unit, infrared ray intensity of radiation light generated when the workpiece is irradiated with the laser beams under the determination irradiation conditions, extracting, by a feature extraction unit, feature information indicating temporal changes in temperature of the workpiece on the basis of time-series data of the infrared ray intensity measured by the measurement unit before processing the workpiece, determining, by a determination unit, processability of the workpiece when the workpiece is processed under preset processing conditions by the laser processing unit on the basis of the extracted feature information and reference information for determining the processability of the workpiece that has been pre-recorded, and reporting, by a reporting unit, a determination result determined by the determination unit.

According to the processability determination device, the processability determination method, and the processability determination program according to another aspect of the present invention, feature information indicating temporal changes in temperature of a workpiece is extracted on the basis of time-series data of infrared ray intensity of radiation light generated when the workpiece is irradiated with laser beams by a laser processing unit under determination irradiation conditions that the laser beams do not penetrate a raw material, processability of the workpiece when the workpiece is processed under preset processing conditions by the laser processing unit is determined on the basis of the extracted feature information and reference information for determining the processability of the workpiece that has been pre-recorded, and a determination result is reported. This makes it possible to, for example, determine the processability based on the processing conditions of the workpiece before processing and report the determination result, thereby facilitating operator's determination based on the result of the determination as to whether the actual processing should be performed under the preset processing conditions, whether the processing conditions should be changed to be suited to the workpiece, or the like, resulting in a reduction in processing defects.

### Advantageous Effect of Invention

According to one aspect of the present invention, the processability based on the processing conditions of the workpiece before processing is determined and the determination result is reported, thereby making it possible to facilitate operator's determination based on the determination result, resulting in a reduction in processing defects.

### Brief Description of Drawings

[Figure 1] Figure 1 is a block diagram illustrating a basic configuration of a processability determination device according to a first embodiment of the present invention.
[Figure 2] Figure 2 is an explanatory diagram illustrating a schematic configuration of the processability determination device.
[Figure 3] Figure 3 is a block diagram illustrating a functional configuration of the processability determination device.
[Figure 4] Figure 4 is an explanatory diagram illustrating a hardware configuration of the processability determination device.
[Figure 5] Figure 5 is a result table showing examination results of an oxidation heat index, a laser cutting surface, and striation changes for each material of a workpiece.
[Figure 6] Figure 6 is a graph showing the relationship between the average roughness of the cutting surface and the oxidation heat index.
[Figure 7] Figure 7 is a graph showing each of the relationship between temperature and time and the relationship between the cooling reaching temperature and time when heating and cooling are repeatedly applied to the workpiece.
[Figure 8] Figure 8 is a diagram showing each of the cutting surface image and the surface roughness when the workpiece in Figure 7 is cut.
[Figure 9] Figure 9 is a graph showing each of the relationship between temperature and time and the relationship between the cooling reaching temperature and time when heating and cooling are repeatedly applied to the workpiece.
[Figure 10] Figure 10 is a diagram showing each of the cutting surface image and the surface roughness when the workpiece in Figure 9 is cut.
[Figure 11] Figure 11 is a diagram for explaining examination results of the surface condition of a workpiece of a type A.
[Figure 12] Figure 12 is a diagram showing each of the cutting surface image and the surface roughness when the workpiece in Figure 11 is cut.
[Figure 13] Figure 13 is a diagram for explaining examination results of the surface condition of a workpiece of a type B.
[Figure 14] Figure 14 is a diagram showing each of the cutting surface image and the surface roughness when the workpiece in Figure 13 is cut.
[Figure 15] Figure 15 is a diagram for explaining examination results of the surface condition of a workpiece of a type C.
[Figure 16] Figure 16 is a diagram showing each of the cutting surface image and the surface roughness when the workpiece in Figure 15 is cut.
[Figure 17] Figure 17 is a flowchart illustrating an example of a processability determination processing flow of the processability determination device.
[Figure 18] Figure 18 is a flowchart illustrating an example of a processability determination processing flow of the processability determination device.
[Figure 19] Figure 19 is a block diagram illustrating a basic configuration of a processability determination device according to a second embodiment of the present invention.
[Figure 20] Figure 20 is a graph showing each of the relationship between temperature and time and the relationship between the cooling reaching temperature and time when heating and cooling are repeatedly applied to a workpiece by the processability determination device according to the second embodiment of the present invention.
[Figure 21] Figure 21 is a graph showing each of the relationship between temperature and time and the relationship between the cooling reaching temperature and time when heating and cooling are repeatedly applied to the workpiece.
[Figure 22] Figure 22 is a graph showing each of the relationship between temperature and time and the relationship between the cooling reaching temperature and time when heating and cooling are repeatedly applied to the workpiece.
[Figure 23] Figure 23 is a graph showing each of the relationship between temperature and time and the relationship between the cooling reaching temperature and time when heating and cooling are repeatedly applied to the workpiece.
[Figure 24] Figure 24 is a graph showing each of the relationship between temperature and time and the relationship between the cooling reaching temperature and time when heating and cooling are repeatedly applied to the workpiece.
[Figure 25] Figure 25 is a graph showing each of the relationship between temperature and time and the relationship between the cooling reaching temperature and time when heating and cooling are repeatedly applied to the workpiece.
[Figure 26] Figure 26 is a result table showing, for each workpiece, features of temporal changes in cooling reaching temperature and the magnitude of dross.
[Figure 27] Figure 27 is a flowchart illustrating another example of a processability determination processing flow for stainless steel in the processability determination device.
[Figure 28] Figure 28 is a flowchart illustrating another example of a processability determination processing flow for stainless steel in the processability determination device.
[Figure 29] Figure 29 is a block diagram illustrating a basic configuration of a processability determination device according to a third embodiment of the present invention.
[Figure 30] Figure 30 is a graph showing the relationship between temperature and time when heating and cooling are repeatedly applied to a workpiece.
[Figure 31] Figure 31 is a graph showing the relationship between temperature and time when heating and cooling are repeatedly applied to the workpiece.
[Figure 32] Figure 32 is a graph showing the relationship between temperature and time when heating and cooling are repeatedly applied to the workpiece.
[Figure 33] Figure 33 is a graph showing the relationship between temperature and time when heating and cooling are repeatedly applied to the workpiece.
[Figure 34] Figure 34 is a result table showing, for each workpiece, examination results of features of temporal changes in maximum reached temperature caused by heating and the magnitude of dross.
[Figure 35] Figure 35 is a flowchart showing a part of another example of a processability determination processing flow for an aluminum alloy in the processability determination device.

### Description of Embodiment

Hereinafter, a processability determination device, a processability determination method, and a processability determination program according to embodiments of the present invention will be described in detail, with reference to the accompanying drawings. It should be noted that the following embodiments are not intended to limit the invention set forth in the claims, and not all of the combinations of the features described in the embodiments are necessarily requisite for the means for solving the problems of the invention. In addition, in the following embodiments, some of constituent elements that are the same as or correspond to each other will be denoted by the same reference signs, and redundant explanations thereof will be omitted. Furthermore, in the embodiments, the positional arrangements, scales, dimensions, and the like of the constituent elements may be illustrated in an exaggerated or diminished form and presented differently from those in reality, and some of the constituent elements may be omitted from the presentation.

### [First Embodiment]

### [Functional Configuration of Processability Determination Device]

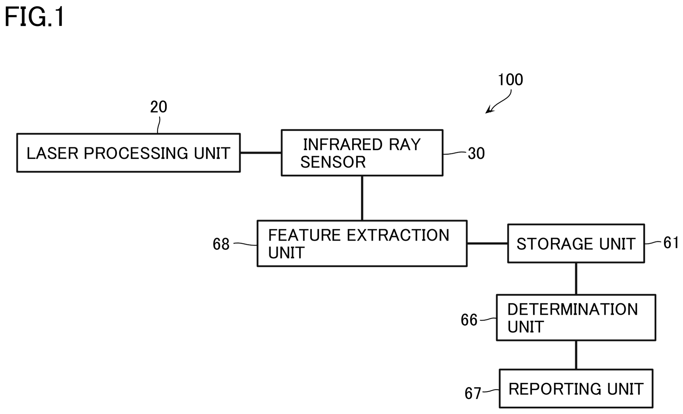

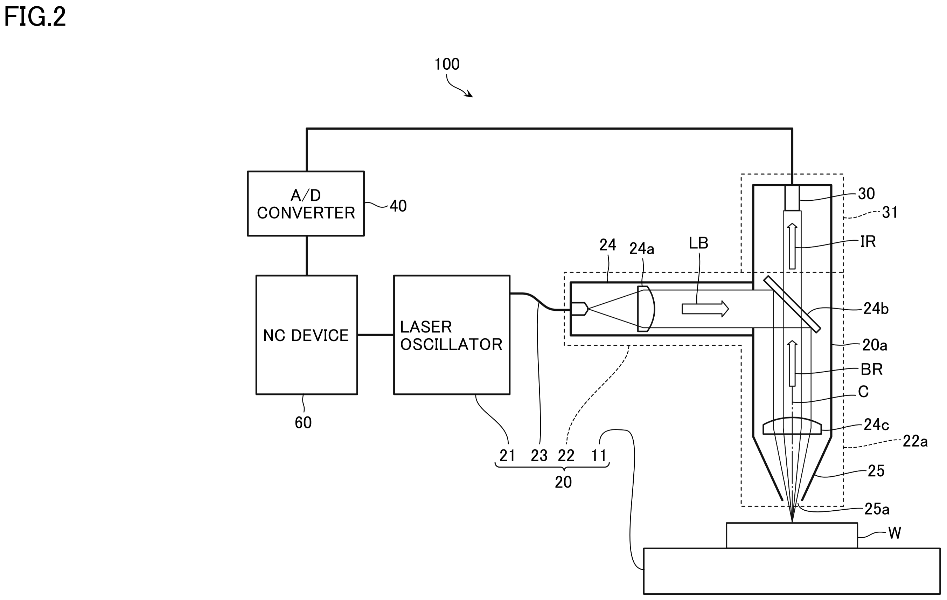

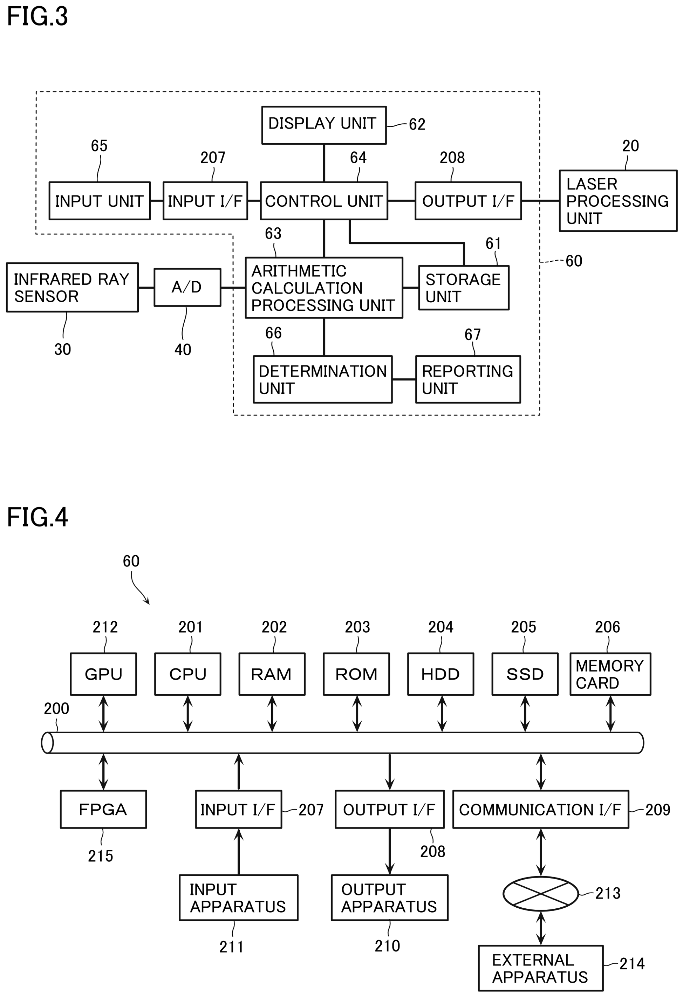

Figure 1 is a block diagram illustrating a functional configuration of a processability determination device according to a first embodiment of the present invention. Figure 2 is an explanatory diagram illustrating a schematic configuration of the processability determination device. Figure 3 is a block diagram illustrating a functional configuration of the processability determination device.

As illustrated in Figure 1, a laser processing device 100, which functions as a processability determination device according to the first embodiment, includes a laser processing unit 20 capable of executing a processing process of irradiating a workpiece W with laser beams LB under processing irradiation conditions to process the workpiece W, and a processability determination process of irradiating the workpiece W with the laser beams LB under determination irradiation conditions that do not exceed a melting point of a raw material of the workpiece W to determine processability of the workpiece W, an infrared ray sensor (measurement unit) 30 configured to measure infrared ray intensity of radiation light generated when the workpiece W is irradiated with the laser beams LB under the determination irradiation conditions, a feature extraction unit 68 configured to extract feature information indicating a temporal or positional change in a temperature of the workpiece W on the basis of time-series data of the infrared ray intensity measured by the infrared ray sensor (measurement unit) 30, a determination unit 66 configured to determine the processability of the workpiece W when the workpiece W is processed under preset processing conditions by the laser processing unit 20 on the basis of the extracted feature information and reference information for determining the processability of the workpiece W that has been pre-recorded, and a reporting unit 67 configured to report a determination result determined by the determination unit 66. The laser processing device 100 also includes a storage unit 61 configured to store the feature information and the reference information. The infrared ray sensor 30 can also be replaced with a device capable of measuring a light intensity, such as a radiation thermometer.

As illustrated in Figure 2, the laser processing device 100 includes, for example, a numerical control (NC) device 60 configured to control the infrared ray sensor 30 and the laser processing unit 20, and an A/D converter 40 configured to convert a light intensity signal from the infrared ray sensor 30 into a digital signal with A/D converting and output it to the NC device 60 according to a trigger signal from the NC device 60.

When the workpiece W is made of, for example, steel, the workpiece W contains iron (Fe) as a main component, and when the workpiece W is made of, for example, nonferrous metal aluminum alloy steel, the workpiece W contains aluminum (Al) as a main component. In addition to these main components, the workpiece W contains elements intentionally added by the manufacturer and elements mixed in as impurities.

The steel is considered to contain at least carbon (C), manganese (Mn), silicon (Si), chromium (Cr), aluminum (Al), and titanium (Ti) as elements that are more easily oxidized than iron (Fe). Here, the impurities refer to inclusions that are not the main contents of the material and may contain substances that induce physical phenomena such as bubbles during melting of the workpiece W.

The laser processing device 100 performs processing such as laser cutting and laser drilling of the workpiece W. The laser processing device 100 includes a laser processing unit 20 configured to irradiate the workpiece W with laser beams LB to perform processing. The laser processing unit 20 includes a processing table 11 on which the workpiece W, such as a sheet metal, is placed, and a drive mechanism (not illustrated).

The processing table 11 supports the workpiece W to be processed. The drive mechanism includes, for example, a first axis (X-axis) carriage that moves in a first direction (X direction) relative to the processing table 11, and a second axis (Y-axis) carriage that moves in a second direction (Y direction) intersecting the first direction on the first axis carriage.

The laser processing unit 20 includes a laser oscillator 21 that generates and emits laser beams LB, a laser processing head 22 that is mounted on the first and second axis carriages and is configured to be movable in the X and Y directions by the first and second axis carriages, and a process fiber 23 that transmits the laser beams LB generated by the laser oscillator 21 to the laser processing head 22.

The laser processing device 100 also includes an assist gas supply device (not illustrated) configured to supply assist gas. The laser processing device 100 is not limited to a configuration in which the laser processing head 22 moves relative to the workpiece W, and a configuration in which the workpiece W moves relative to the laser processing head 22 may also be adopted.

The laser oscillator used as the laser oscillator 21 is of a type in which seed light emitted from a laser diode excites and amplifies Ytterbium (Yb) or the like in a resonator to emit the laser beams LB having a predetermined wavelength, or a type that directly uses the laser beams LB emitted from a laser diode, for example.

The laser oscillator 21 emits the laser beams LB in a 1 µm band having a wavelength of 900 nm to 1100 nm. For example, a direct diode laser (DDL) oscillator emits the laser beams LB having a wavelength of 910 nm to 950 nm, while a fiber laser oscillator emits the laser beams LB having a wavelength of 1060 nm to 1080 nm.

A blue semiconductor laser emits the laser beams LB having a wavelength of 400 nm to 460 nm. A green laser may be a fiber laser oscillator or a DDL oscillator that emits the laser beams LB having a wavelength of 500 nm to 540 nm, or a multi-wavelength resonator optically combined with the laser beams LB in the 1 µm band. Additionally, the laser oscillator 21 emits guide beams GB (having a wavelength of 650 nm, for example) to confirm the position on the workpiece W at which the laser beams LB are emitted (not illustrated).

The laser processing head 22 has a cylindrical housing 20a that includes an irradiation center axis C for the laser beams LB and includes a beam control unit 24. The beam control unit 24 has a function of controlling the laser beams LB to have a condensing diameter and divergence angle suited to the material of the workpiece W. The beam control unit 24 includes a collimator lens 24a that receives the laser beams LB emitted from an output end of the process fiber 23 and converts them into a parallel luminous flux, a bend mirror 24b that reflects the substantially parallel luminous flux of laser beams LB emitted from the collimator lens 24a downward in a third direction (Z direction) orthogonal to the X and Y axes while allowing the light having a predetermined wavelength to be transmitted therethrough, and a condensing lens 24c for processing that focuses the laser beams LB reflected by the bend mirror 24b and irradiates the workpiece W with the laser beams LB.

A coating is applied to the bend mirror 24b to reflect the wavelengths (for example, 1080 nm and 650 nm) of at least the laser beams LB and the guide beams GB, for example. The bend mirror 24b can be designed to change its transmittance wavelength characteristics according to the wavelength band of any laser beams LB used for processing, so it may be coated to reflect only the laser beams for processing.

The housing 20a is formed to have a tapered shape at a tip end side of the laser processing head 22. The tip end of the laser processing head 22 includes a nozzle 25 having a circular opening 25a for irradiating the workpiece W with the laser beams LB. The nozzle 25 has a nozzle function of blowing a gas stream at a predetermined assist gas pressure supplied from an assist gas supply device, together with the laser beams LB, onto the workpiece W, to remove the molten workpiece W. The nozzle 25 is detachably provided on the laser processing head 22.

The collimator lens 24a, the bend mirror 24b, the condensing lens 24c, and the nozzle 25 are fixed in the laser processing head 22 with the optical axis adjusted in advance. In order to adjust the focus position, a lens drive section (not illustrated) is provided in the beam control unit 24 to drive the collimator lens 24a in the direction (X-axis direction) parallel to the optical axis. Also, in order to adjust the focus position, the laser processing head 22 itself may be configured to be movable in the Z-axis direction by the drive mechanism (not illustrated).

The infrared ray sensor 30 is provided inside a sensor unit 31 located on an upper portion of the housing 20a of the laser processing head 22, for example. The sensor unit 31 includes an optical lens system (not illustrated) along with the infrared ray sensor. The infrared ray sensor 30 is provided on a transmission side of the bend mirror 24b, facing the workpiece W, inside the sensor unit 31 at the upper portion of the housing 20a.

The infrared ray sensor 30 receives, as input, infrared light (infrared rays) IR to be measured in a specific wavelength band that has been transmitted through the bend mirror 24b out of the radiation light contained in the light BR directed toward the bend mirror 24b from the processing side of the workpiece W. The radiation light includes infrared rays emitted by thermal radiation among electromagnetic waves having a broadband wavelength emitted from the material of the workpiece W heated by the laser beams LB. The infrared ray sensor 30 captures the infrared rays and converts them into an electrical signal.

The infrared ray sensor (measurement unit) 30 in this example measures the infrared ray intensity in the wavelength band of 1600 nm or more. That is, the infrared ray sensor 30 is configured in which, for example, a wavelength filter that transmits only wavelengths in a specific band (1600 nm or more, 2500 nm or less) is arranged in a prestage, and a photodiode using, for example, InGaAs (indium gallium arsenide) is used as a photoelectric conversion element in a poststage.

In a case where the energy distribution and images in the visible ray region are monitored separately with the NC device 60, a dichroic mirror (not illustrated) may be arranged between an emission unit 22a side of the laser processing head 22 and the sensor unit 31 to transmit the infrared rays and reflect the visible rays.

As illustrated in Figure 3, the NC device 60 controls the laser processing unit 20 that performs the processing, and, in addition, functionally includes an arithmetic calculation processing unit 63, a control unit 64, a display unit 62, an input unit 65, a storage unit 61, a determination unit 66, and a reporting unit 67. The arithmetic calculation processing unit 63 includes a feature extraction unit 68 as illustrated in Figure 1. The arithmetic calculation processing unit 63 also functions as a sensor signal processing unit.

That is, a sensor output signal of current output captured and photoelectrically converted by the infrared ray sensor 30 is transmitted to the arithmetic calculation processing unit 63. The current-transferred sensor output signal is converted into a voltage signal by a current-voltage conversion circuit (not illustrated), and the sensor output signal converted into the voltage signal is converted into a digital signal by an A/D converter 40, and then, the digital signal is input to the arithmetic calculation processing unit 63.

The arithmetic calculation processing unit 63 consists of a hardware or middleware arithmetic calculation processing device or the like that can perform specific arithmetic calculation processing at high speed, converts an instantaneous voltage value of the sensor output signal into the light intensity of the infrared rays, and acquires time-series data of this light intensity. Then, the arithmetic calculation processing unit 63 functions as the feature extraction unit 68 that extracts feature information representing the temporal transition of temperature characteristics based on the obtained time-series data of light intensity.

The control unit 64 controls the operation of the laser processing unit 20 via the output interface (I/F) 208. The display unit 62 displays a setting input screen to which various information such as processing conditions for processing is input, a display screen on which various information such as a determination result to be reported to an operator is displayed, and the like. The input unit 65 may be configured to include various input devices such as a keyboard, a trackball, a mouse, and a joystick.

The storage unit 61 includes various storage media and stores various information such as the above-described feature information and reference information in a readable and writable manner. The determination unit 66 determines the processability of the workpiece W based on the processing conditions for the processing to be performed, on the basis of the feature information and reference information stored in the storage unit 61, for example. The reporting unit 67 reports the determination result by the determination unit 66 to the operator via the display unit 62. The reference information is pre-recorded information that has been selected and determined through experiments and the like.

The display unit 62 may be configured to include a touch panel that functions as the input unit 65. When the display unit 62 includes a touch panel, the operator can input various information regarding the workpiece W to the control unit 64 of the NC device 60 via input interface (I/F) 207 by operating the display unit 62, for example.

### [Hardware Configuration]

Figure 4 is an explanatory diagram illustrating a hardware configuration of the processability determination device. Although Figure 4 illustrates, as an example, the hardware configuration of the NC device 60 of the laser processing device 100 functioning as the processability determination device, the hardware configuration is not limited to this, and various configurations such as those equivalent to a general-purpose personal computer (PC) can be adopted.

As illustrated in Figure 4, the NC device 60 is achieved by hardware including, for example, a graphics processing unit (GPU) 212, a central processing unit (CPU) 201, a random access memory (RAM) 202, a read-only memory (ROM) 203, a hard disk drive (HDD) 204, a solid state drive (SSD) 205, a memory card 206, and a field programmable gate array (FPGA) 215.

The NC device 60 also includes the above-described input interface (I/F) 207, output interface (I/F) 208, and a communication interface (I/F) 209. The components 201 to 209 and 215 of the hardware are connected to each other via a bus 200.

The input I/F 207 can be connected to an input apparatus 211 that includes, in addition to the above-described various input devices such as a keyboard, a trackball, a joystick, a mouse, and a touch panel, measurement devices such as the infrared ray sensor 30, and various sensors such as a temperature sensor, an optical sensor, an acoustic sensor, an image sensor, and a spectral sensor. The output I/F 208 can be connected to an output apparatus 210 that includes, in addition to the display unit 62 that displays information via the reporting unit 67, speakers, lamps and the like which are not illustrated. The communication I/F 209 communicates with an external apparatus 214 such as a server through a network 213 such as the Internet. Each component of the above-described laser processing device 100 can also be configured by such hardware.

### [Processability Determination Method]

Next, a method of determining the processability using the processability determination device will be described.

In the present embodiment, mild steel was used as the workpiece W. The present inventors performed processing (laser cutting) on various workpieces W different in components in the raw material (internal components) and properties of the raw material surface (surface properties) under standard processing conditions of the NC device 60 and observed the cut surfaces of the workpieces W. As a result, it has been found that the processability (cutting properties) of the workpiece W is greatly influenced by the surface properties and the characteristics (internal characteristics) of the internal components of the workpiece W.

That is, the surface properties of the workpiece W specifically refer to the state of an oxide film in a surface layer portion of a raw material surface of the workpiece W and the adhesion of the oxide film to the raw material surface (hereinafter referred to as "state and adhesion of the oxide film"). Here, the surface layer portion refers to a portion corresponding to the layer of the oxide film formed on the raw material surface, and if no oxide film exists on the raw material surface, this surface layer portion will also not exist. The processability of the workpiece W has been found to be greatly influenced primarily by the state and adhesion of the oxide film on the raw material surface of the workpiece W. Hereinafter, this factor will be referred to as a "factor attributed to the surface". If the factor attributed to the surface cannot be said to be good, the cutting surface shows significant disturbance of the striations on a laser incident surface side. In particular, in portions where the oxide film has peeled off, the striations are disturbed, and notches are likely to occur.

Furthermore, the internal characteristics of the workpiece W specifically refer to the magnitude of the oxidation reaction caused by the internal components of the workpiece W. The processability of the workpiece W has been found to be significantly influenced secondarily by the oxidation reaction heat based on the internal components of the workpiece W. Hereafter, this factor will be referred to as an "internal factor". For example, in a thick plate made of mild steel, oxygen is used as assist gas, and melt cutting is performed using the heat of the laser beams and the oxidation reaction heat as heat sources. At that time, a raw material with a high number of easily oxidizable elements tends to have a rough cutting surface. Conceivable reasons for this are that large oxidation heat can easily lead to excessive combustion, and these elements make it difficult for heat to diffuse due to their low thermal conductivity, which tends to promote an increase in the temperature of the cutting surface.

Therefore, to examine the internal factor, first, the first examination was conducted. In the first examination, to eliminate the influence of the surface condition of the workpiece W, laser cutting was performed after removing the oxide film from the raw material surface of the workpiece W to standardize the surface condition. The removal of the oxide film was performed by grinding to a predetermined depth so that the surface roughness reached a specified value using a predetermined laser power. The laser cutting was performed under processing conditions of laser power of 3 (kW), a processing speed of 630 (mm/min), and oxygen (O₂) as assist gas.

The cutting properties of the material of the workpiece W is greatly influenced by the difference in oxidation reaction heat of the internal components, even if the heat input from the laser beams LB is the same, and it is considered to correlate with the amount of elements that are more easily oxidized than iron (Fe) contained in the material. Therefore, an index of magnitude of the oxidation heat (hereinafter referred to as "oxidation heat index") was calculated from an amount of oxidation heat generation of each element (carbon (C), manganese (Mn), silicon (Si), chromium (Cr), aluminum (Al), titanium (Ti)) more easily oxidized than the above-described iron (Fe).

The oxidation heat index corresponds to the oxidation reaction heat. The oxidation reaction heat is obtained from a degree of contribution of each element contained in the workpiece W to the oxidation heat. The degree of contribution of each element to the oxidation heat is obtained from the magnitude of the amount of oxidation heat generation of each element that reacts with one mole of oxygen. Thus, the oxidation heat index was obtained using the following formula (1).
[Formula 1] 128/24× [%C] + 122/110× [%Mn] + 132/28× [%Si] + 105/69× [%Cr] + 175/36× [%Al] + 140/48× [%Ti] = oxidation heat index ... (1)

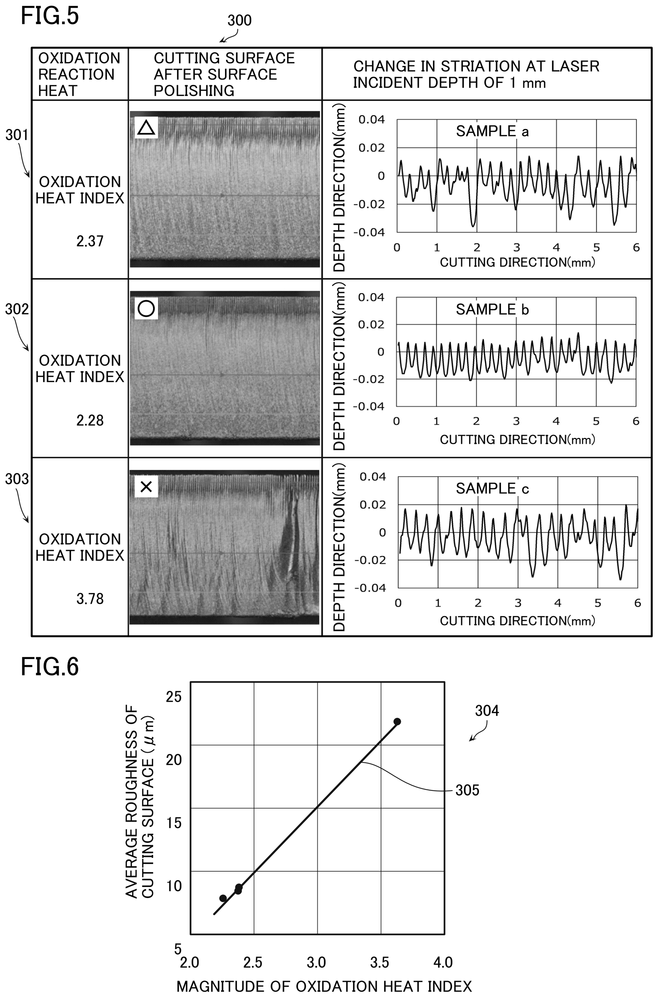

Figure 5 is a result table showing examination results of an oxidation heat index, a laser cutting surface, and striation changes for each material of a workpiece. Figure 6 is a graph showing the relationship between the average roughness of the cutting surface and the oxidation heat index. The quality evaluations of respective items in a result table 300, indicated by "○", "△", and "×", were defined on the basis of the actual confirmation and evaluation of the obtained values and cutting surfaces and the like from a quality perspective, corresponding to "Good", "Acceptable", and "Poor", respectively.

As illustrated in Figure 5, the result table 300 shows results 301, 302, and 303 for respective samples a, b, and c.

For the sample a, the oxidation heat index was 2.37, and the cutting surface had partially deeper striations with larger pitches and slightly rougher texture, resulting in evaluation as "△". It can be confirmed that the result has been obtained that the change in striation when an incident depth of the laser beams LB was 1 mm showed some variation in depth.

For the sample b, the oxidation heat index was 2.28, and the cutting surface had few notches and the striations with the shallowest depth, resulting in evaluation as "○". The change in striation when an incident depth of the laser beams LB was 1 mm showed little variation in depth and the shallowest striations among all the samples, and therefore, it can be confirmed that the result for the cutting surface has been obtained approximately as evaluated.

For sample c, the oxidation heat index was 3.78, and the cutting surface had the most notches among all the samples, resulting in evaluation as "×". The change in striation when an incident depth of the laser beams LB was 1 mm showed significant variation in depth and deep striations, and therefore, it can be confirmed that the result for the cutting surface has been obtained approximately as evaluated.

The average roughness of the cutting surfaces of the samples a, b, and c was calculated, and as illustrated in Figure 6, the calculation results were plotted in a graph 304 with the vertical axis representing the average roughness (µm) of the cutting surface and the horizontal axis representing the magnitude of the oxidation heat index, yielding a regression line 305. As clearly seen in Figure 6, it has been found that the roughness of the cutting surface increases in the order of the magnitude of the oxidation reaction heat represented by the oxidation heat index. Therefore, it has been proven that a correlation exists between the cutting properties of the material of the workpiece W and the magnitude of the oxidation reaction heat.

The above-described elements that generate the oxidation reaction heat are generally considered to make it difficult for heat to diffuse due to their low thermal conductivity, which promotes an increase in the temperature of the cutting surface, as described above. Thus, the magnitude of the oxidation reaction heat of the material of the workpiece W was regarded as the magnitude of thermal conduction, and a second examination was conducted to classify the differences in internal material and thermal conduction of the workpiece W. It has been found that the thermal conduction decreases as the elements contained in the workpiece W, such as carbon (C), manganese (Mn), and silicon (Si), increase, so the differences in thermal conduction were examined by repeatedly heating and cooling the inside of the raw material of the workpiece W with laser beams LB.

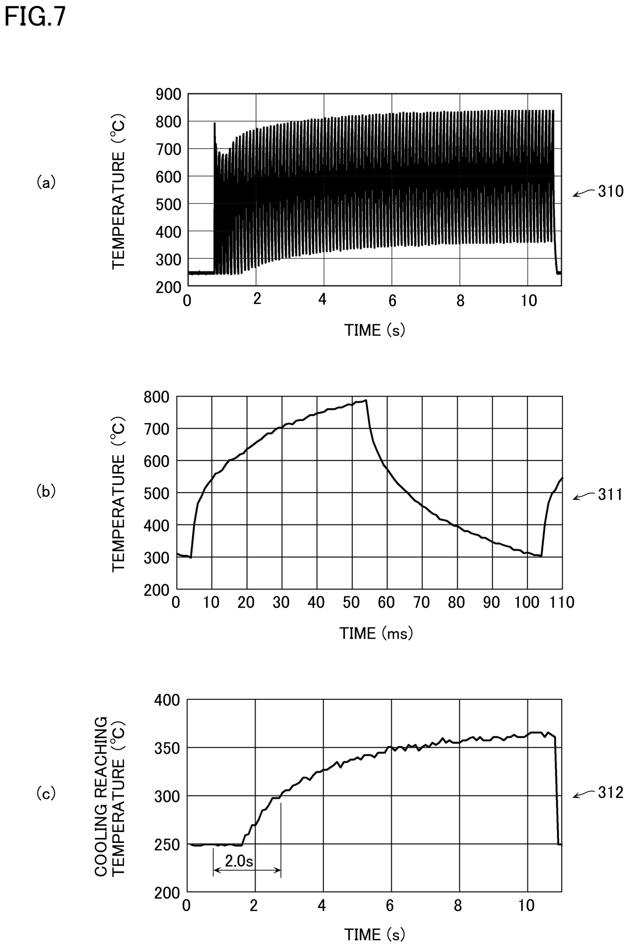

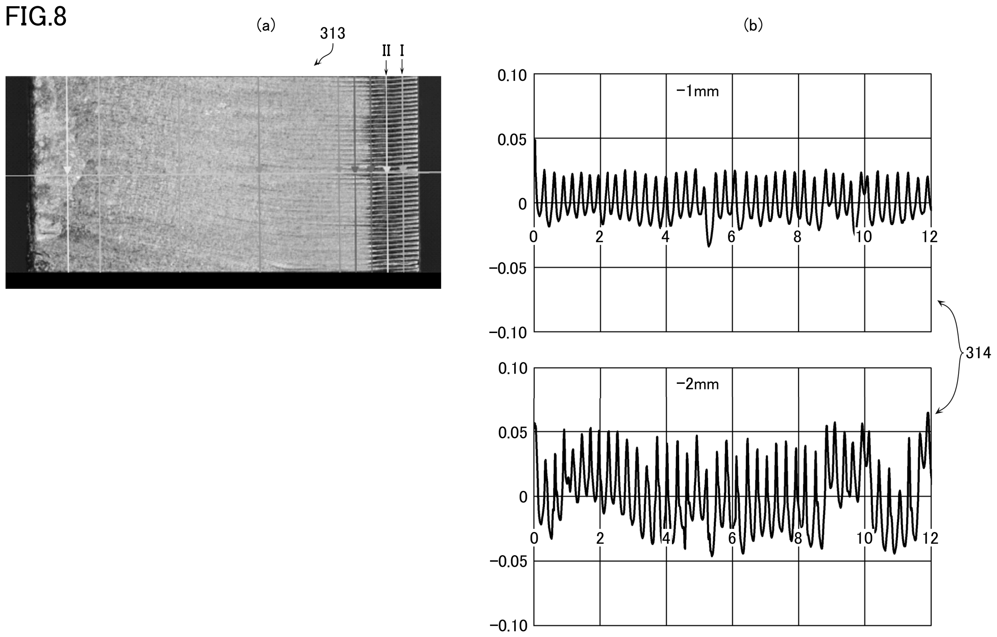

Figure 7 is a graph showing each of the relationship between temperature and time and the relationship between the cooling reaching temperature and time when heating and cooling are repeatedly applied to the workpiece. Figure 8 is a diagram showing each of the cutting surface image and the surface roughness when the workpiece in Figure 7 is cut.

Figure 7(a) shows a temperature waveform 310 obtained by measuring a sample d with the infrared ray sensor 30 and converting the time-series data of the infrared ray intensity output from the infrared ray sensor 30 into the time-series data of the temperature. In Figure 7(a), the vertical axis represents the temperature (°C), and the horizontal axis represents the time (seconds: s). In the second examination, as the determination irradiation conditions, the laser power of the laser beams LB with which the inside of the raw material of the workpiece W having a thickness of 25 mm was irradiated was set to 400 W, the frequency to 10 Hz, and the duty to 50%, and heating was repeatedly performed 10 times per second. Figure 7(b) is a graph showing a temperature waveform 311 corresponding to one cycle of the temperature waveform 310 enlargedly shown by rescaling the time axis in Figure 7(a) in milliseconds. As illustrated in Figures 7(a) and (b), it can be seen that in the temperature measurement time period after the elapse of 1 second from the irradiation start of the laser beams LB (from 1 second to 11 seconds after the start of laser irradiation), the temperature waveforms 310 and 311 of the workpiece W fluctuate finely (repetition of heat generation and heat dissipation) between approximately 300°C and approximately 800°C over time by multiple cycles of laser irradiation.

Figure 7(c) is a waveform graph showing a lower envelope of the temperature waveform 310 formed by repeated heating and cooling as indicated in Figure 7(a). This waveform graph is obtained by extracting the temporal transition of the cooling reaching temperature for each cycle of the waveform graph in Figure 7(a) as feature information (second feature information) 312. This feature information 312 indicates the degree of temperature rise caused by the thermal conduction of the workpiece W and can be used for the subsequent determination evaluations. On the basis of this feature information 312, the time period from the start of temperature measurement (1 second after the start of laser irradiation) to reach the cooling reaching temperature (300°C) was set as a determination criterion (second determination criterion) for determining the internal characteristics of the material of the workpiece W. That is, when the time period to reach the cooling reaching temperature was less than 2.0 seconds, the thermal conduction was evaluated as "×", when it was 2.0 seconds or more but less than 2.5 seconds, the thermal conduction was evaluated as "△", and when it was 2.5 seconds or more, the thermal conduction was evaluated as "○" .

As illustrated in Figure 7(c), for the sample d, the time period to reach the cooling reaching temperature (300°C) is 2.0 seconds, so the thermal conduction is evaluated as "△". This indicates that the material has a moderate thermal conduction, being neither difficult nor easy to raise the temperature.

In addition, the cutting surface image of the workpiece W of the sample d was as shown in an image 313 in Figure 8(a), and the surface roughness at each depth of 1 mm (indicated by line I) and 2 mm (indicated by line II) from the surface was as shown in a graph 314 in Figure 8(b). The surface roughness at the depth of 1 mm from the surface of the workpiece W of the sample d was more stable than the surface roughness at the depth of 2 mm from the surface, but it had an overall variation, and some disturbance of striations was also observed in the cutting surface.

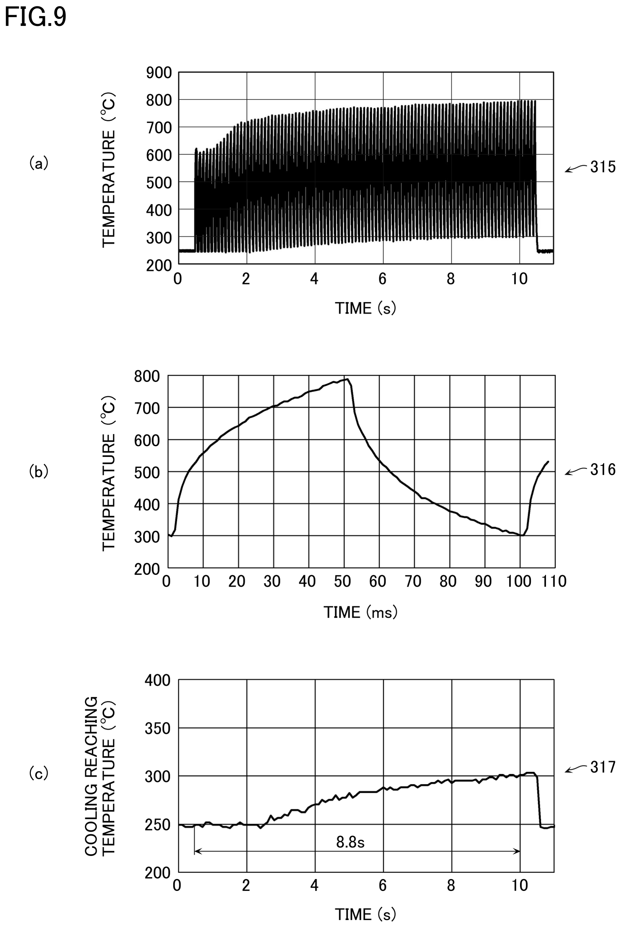

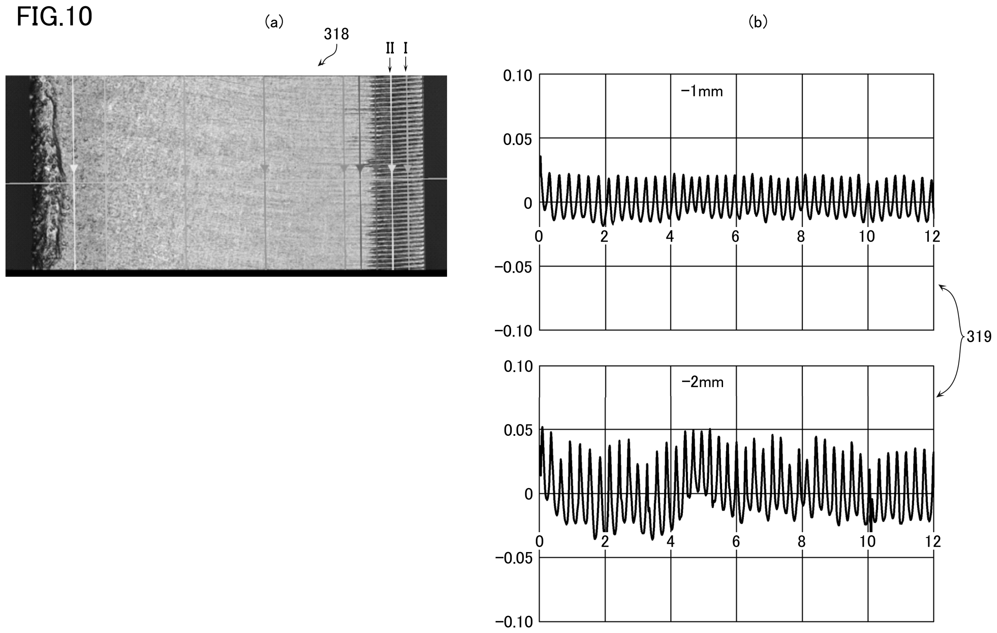

Figure 9 is a graph showing each of the relationship between temperature and time and the relationship between the cooling reaching temperature and time when heating and cooling are repeatedly applied to the workpiece. Figure 10 is a diagram showing each of the cutting surface image and the surface roughness when the workpiece in Figure 9 is cut.

Figure 9(a) shows a temperature waveform 315 obtained by measuring a sample e with the infrared ray sensor 30 and converting the time-series data of the infrared ray intensity output from the infrared ray sensor 30 into the time-series data of the temperature. The processing conditions and determination irradiation conditions are the same as those for sample d. Also, a temperature waveform 316 and feature information (second feature information) 317 are the same as those in Figure 7.

As illustrated in Figure 9(c), for the sample e, the time period to reach the cooling reaching temperature (300°C) is 8.8 seconds, so the thermal conduction is evaluated as "○". This indicates that the material is difficult to raise in temperature and has a low thermal conductivity.

In addition, the cutting surface image of the workpiece W of the sample e was as shown in an image 318 in Figure 10(a), and the surface roughness at each depth of 1 mm (indicated by line I) and 2 mm (indicated by line II) from the surface was as shown in a graph 319 in Figure 10(b). The surface roughness at each depth of 1 mm and 2 mm from the surface of the workpiece W of the sample e was stable and had no overall variation, and no disturbance of the striations also appeared in the cutting surface. From the above, it has been found that the workpiece W of the sample e, which has the thermal conduction evaluated as "○", can provide a clean cutting surface having a relatively smaller surface roughness and fewer notches than those of the workpiece W of the sample d, which has the thermal conduction evaluation as "△".

Next, a third examination was conducted to examine the factor attributed to the surface. In the third examination, it was determined to first examine the relationship between the state of the oxide film on the raw material surface of the workpiece W and the disturbance of the striations.

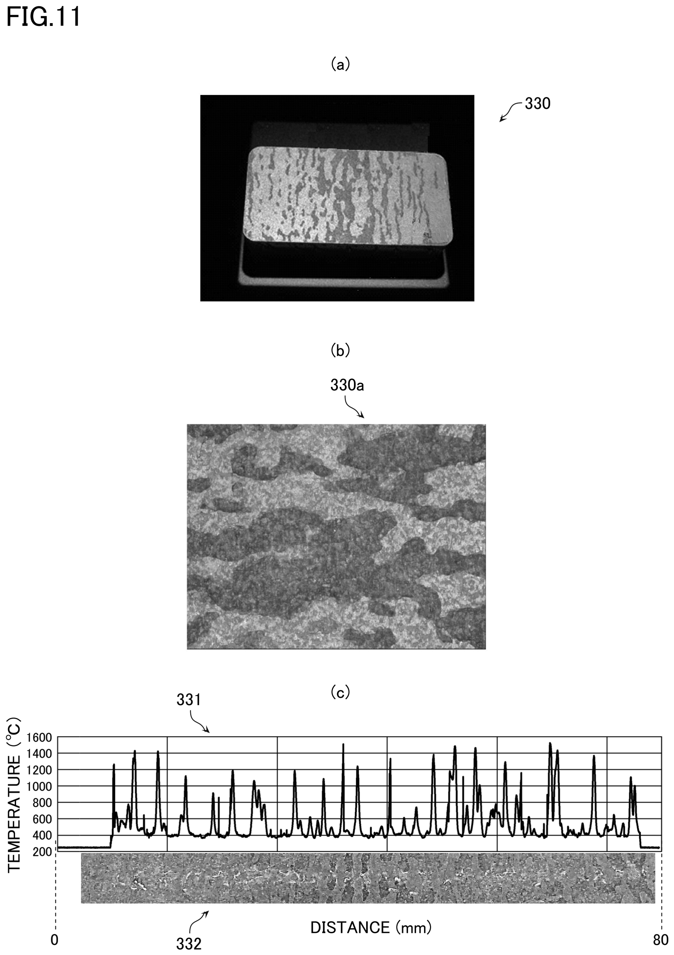

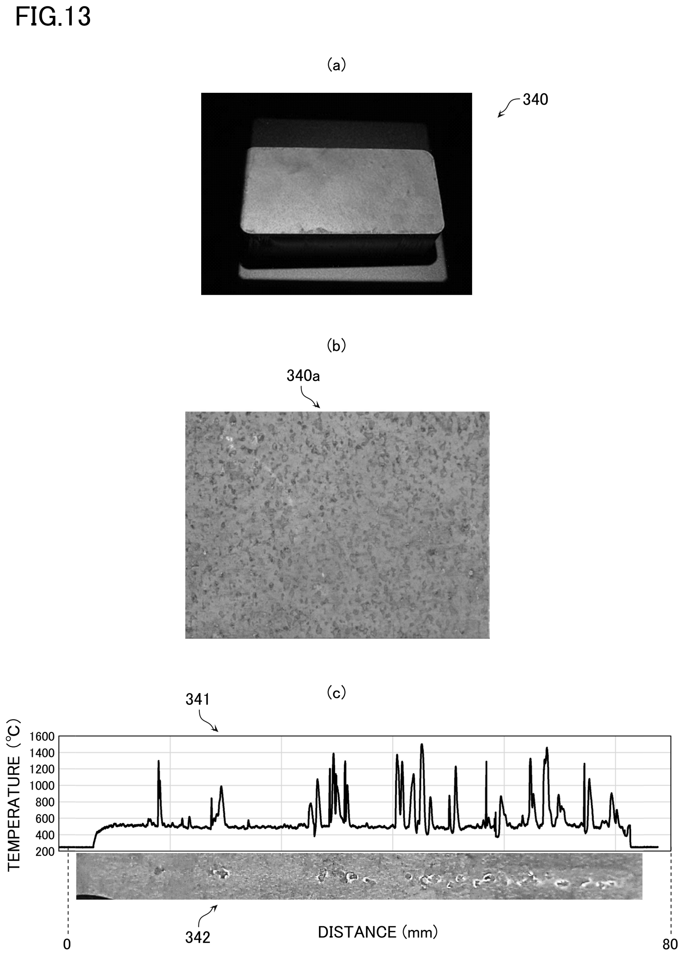

For example, the workpiece W of a type A shown in Figure 11 corresponds to a type in which the oxide film peels off (is spotty) in its raw material state and a peeling rate of the oxide film is relatively large. In addition, the workpiece W of a type B shown in Figure 13 corresponds to a type in which no peeling of the oxide film is found in its raw material state (the oxide film is adhering), but the oxide film peels off due to laser irradiation. In the workpiece W of each of types A and B, when the oxide film peels off from the raw material surface, the laser absorption rate and the ease of oxidation reaction on the surface change. As a result, in the cutting surface, the striations become uneven in the portions where the oxide film has peeled off. Therefore, it is considered that the disturbance of the striations in the cutting surface has a strong correlation with the adhesion of the oxide film on the raw material surface. This is also apparent from the fact that in the image of the cutting surface of the workpieces W of each of types A and B examined above, the striations were deep and notched starting from the locations where the oxide film had peeled off.

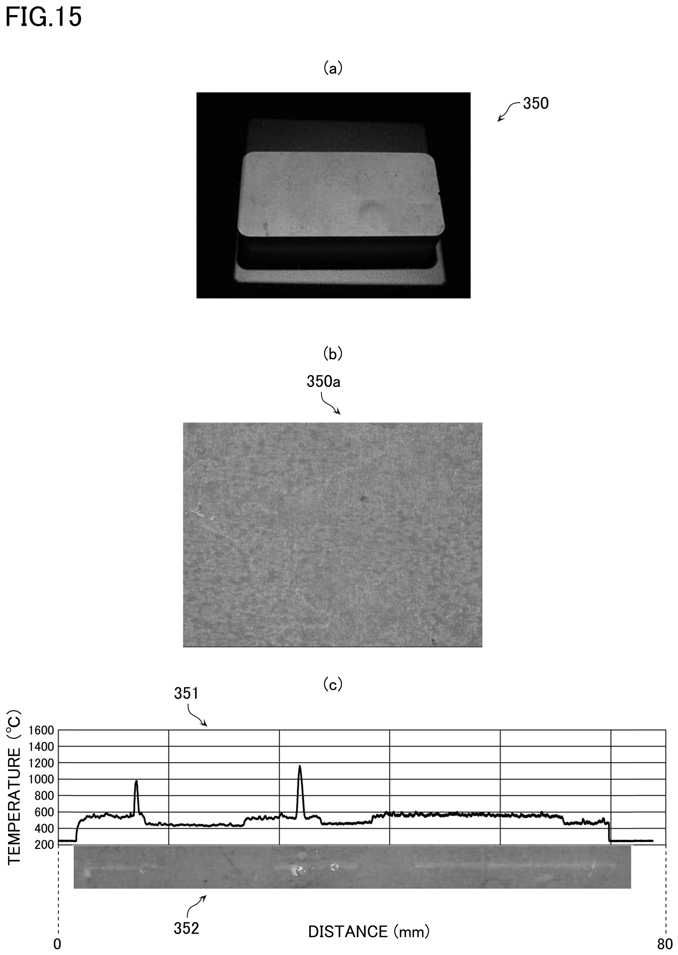

On the basis of the above, it has been found that the surface properties of the workpiece W can be classified into three types, including a type C shown in Figure 15, in which the oxide film does not peel off from the raw material surface at all even with laser irradiation, in addition to the above-described types A and B. Therefore, in the third examination, as the determination irradiation conditions, the laser power of the laser beams LB with which the raw material surface of the workpiece W having a thickness of 19 mm was irradiated was set to 125 W, the speed to 500 mm/min, the frequency to 100 Hz, and the duty to 100%, and laser irradiation (laser scanning) was performed with a scanning distance of 80 mm.

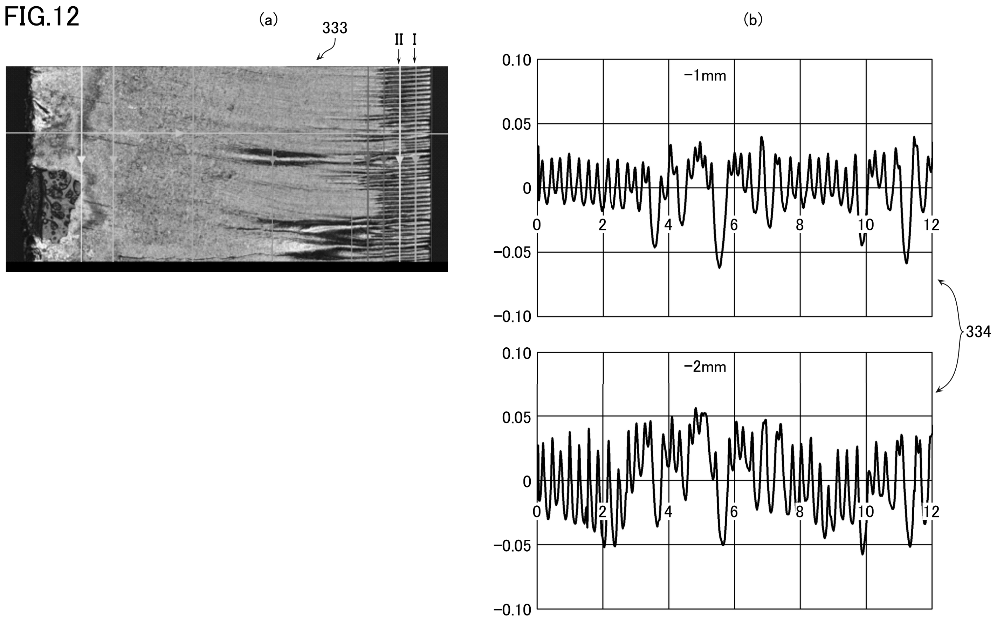

Figure 11 is a diagram for explaining examination results of the surface condition of the workpiece of the type A. Figure 12 is a diagram showing each of the cutting surface image and the surface roughness when the workpiece in Figure 11 is cut.

As illustrated in Figures 11(a) and 11(b), the workpiece W of the type A has portions where the oxide film is peeling off in the raw material state, as can be seen from its surface image 330 and an enlarged image 330a of the raw material surface. Figure 11(c) includes a waveform graph showing a positional change in the detected temperature when laser scanning was performed on the workpiece W of the type A. This waveform graph is obtained by extracting the positional change in temperature as feature information (first feature information) 331. Since portions exist where the oxide film is peeling off in the raw material state, as illustrated in Figure 11(c), when the laser scanning is performed, the feature information (first feature information) 331 is obtained, as shown, indicating in the waveform graph the positional change in temperature (°C) on the vertical axis with respect to the horizontal axis representing distance (mm). The feature information (first feature information) 331 represents the temperature pattern measured at emissivity of 1 with the infrared ray intensity from 1.95 µm to 2.5 µm by the infrared ray sensor 30 (the same applies below). A surface image 332 below the waveform graph represents the surface condition after the laser scanning corresponding to the waveform graph.

That is, in the raw material surface, the temperature decreases in portions where the oxide film has peeled off even before being irradiated with the laser beams LB. In an area where the oxide film is present thereon (adhered thereon), the weak adhesion portions of the oxide film will cause peeling of the oxide film due to irradiation of the laser beams LB. In portions where the oxide film has peeled off due to such laser irradiation (the whitish portions in the surface image 332), the oxide film emits light and generates heat, resulting in an increase in temperature. Therefore, the feature information (first feature information) 331 indicated that peaks on the high-temperature side appeared more frequently, and many disturbances of the waveform were observed on both of the high-temperature and low-temperature sides.

In addition, the cutting surface image of the workpiece W of the type A was as shown in an image 333 in Figure 12(a), and the surface roughness at each depth of 1 mm (indicated by line I) and 2 mm (indicated by line II) from the surface was as shown in a graph 334 in Figure 12(b). The surface roughness at each depth of 1 mm and 2 mm from the surface of the workpiece W of the type A was unstable and had an overall variation, and many disturbances of the striations were also observed in the cutting surface.

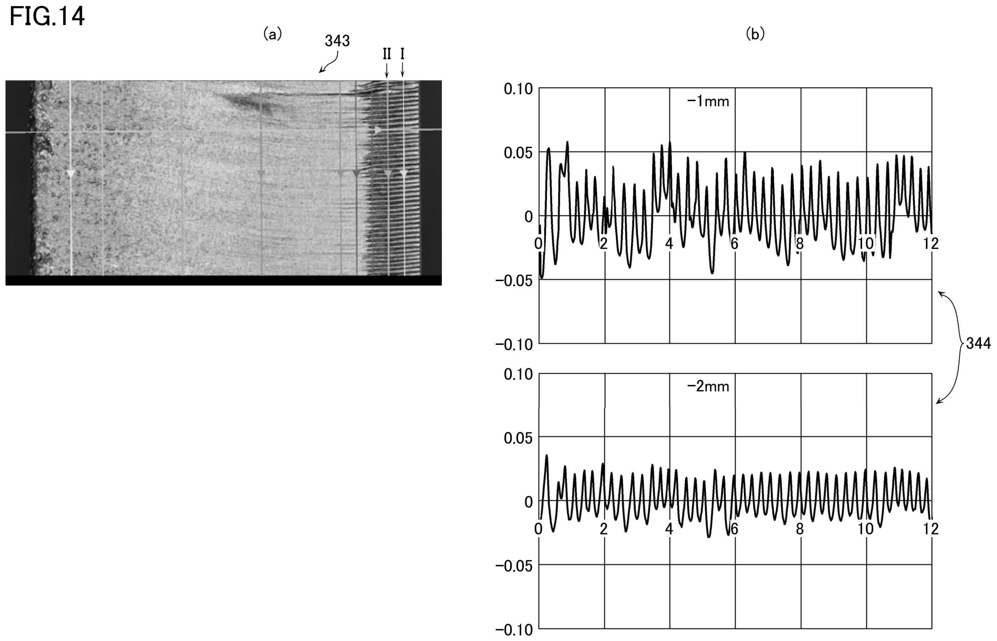

Figure 13 is a diagram for explaining examination results of the surface condition of the workpiece of the type B. Figure 14 is a diagram showing each of the cutting surface image and the surface roughness when the workpiece in Figure 13 is cut.

As illustrated in Figures 13(a) and 13(b), the workpiece W of the type B shows that no peeling of the oxide film is found in its raw material state (the oxide film is adhered), as can be seen from its surface image 340 and an enlarged image 340a of the raw material surface. Figure 13(c) includes a waveform graph showing a positional change in the detected temperature when laser scanning was performed on the workpiece W of the type B. This waveform graph is obtained by extracting the positional change in temperature as feature information (first feature information) 341. Although no peeling of the oxide film is found in the raw material state, as illustrated in Figure 13(c), when the laser scanning is performed, the feature information (first feature information) 341 is obtained, as shown, indicating in the waveform graph the positional change in temperature (°C) on the vertical axis with respect to the horizontal axis representing distance (mm), and the surface condition after the laser scanning is as shown in a surface image 342 below the waveform graph.

That is, since weak adhesion portions of the oxide film that caused peeling of the oxide film due to laser irradiation (whitish portions in the surface image 342) tended to increase on the raw material surface, the feature information (first feature information) 341 was stable on the low-temperature side compared to that of the type A, but on the high-temperature side, peaks still appeared frequently, and some disturbances of the waveform were also observed on both of the high-temperature and low-temperature sides.

In addition, the cutting surface image of the workpiece W of the type B was as shown in an image 343 in Figure 14(a), and the surface roughness at each depth of 1 mm (indicated by line I) and 2 mm (indicated by line II) from the surface was as shown in a graph 344 in Figure 14(b). The surface roughness at the depth of 2 mm from the surface of the workpiece W of the type B was more stable than that at the depth of 1 mm from the surface, and showed less overall variation than that of the workpiece W of the type A, but some disturbances of the striations appeared in the cutting surface.

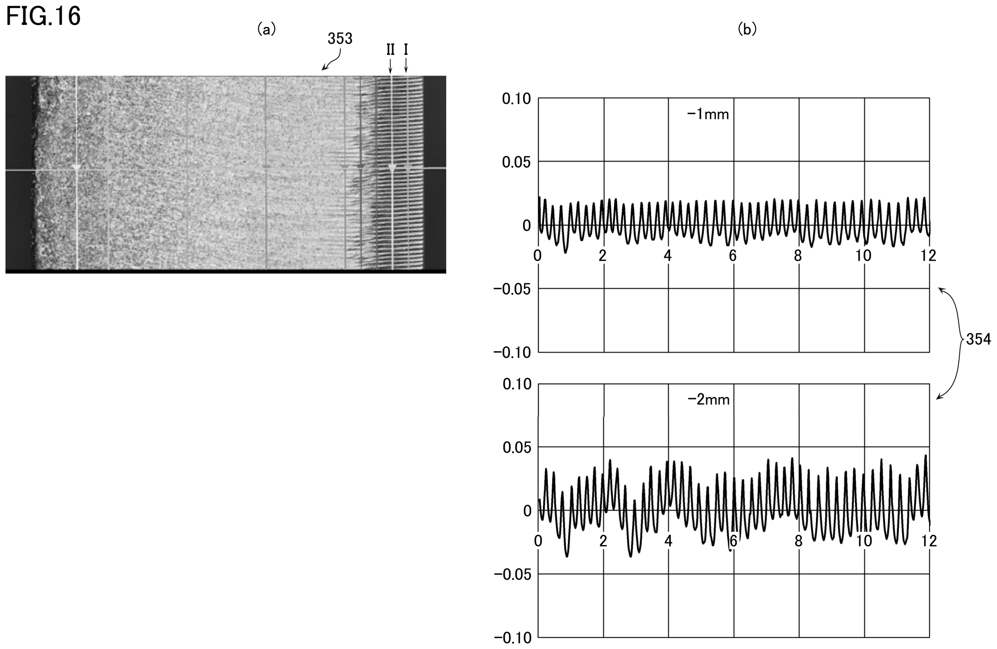

Figure 15 is a diagram for explaining examination results of the surface condition of the workpiece of the type C. Figure 16 is a diagram showing each of the cutting surface image and the surface roughness when the workpiece in Figure 15 is cut.

As illustrated in Figures 15(a) and 15(b), the workpiece W of the type C shows that no peeling of the oxide film from the raw material surface is found in its raw material state (the oxide film is firmly adhered), as can be seen from its surface image 350 and an enlarged image 350a of the raw material surface. Figure 15(c) includes a waveform graph showing a positional change in the detected temperature when laser scanning was performed on the workpiece W of the type C. This waveform graph is obtained by extracting the positional change in temperature as feature information (first feature information) 351. Since the oxide film does not peel off at all in the raw material state, as illustrated in Figure 15(c), when the laser scanning is performed, the feature information (first feature information) 351 is obtained, as shown, indicating in the waveform graph the positional change in temperature (°C) on the vertical axis with respect to the horizontal axis representing distance (mm). A surface image 352 below the waveform graph represents the surface condition after the laser scanning corresponding to the waveform graph.

That is, since no peeling of the oxide film was almost found on the raw material surface, although very small portions of the oxide film peeled off due to laser irradiation (the whitish portions in the surface image 352), the feature information (first feature information) 351 showed that the peak on the high-temperature side appeared slightly, while the waveform was stable with almost no disturbance on the low-temperature side.

In addition, the cutting surface image of the workpiece W of the type C was as shown in an image 353 in Figure 16(a), and the surface roughness at each depth of 1 mm (indicated by line I) and 2 mm (indicated by line II) from the surface was as shown in a graph 354 in Figure 16(b). The surface roughness at the depth of 1 mm from the surface of the workpiece W of the type C was more stable than the surface roughness at the depth of 2 mm from the surface, but showed less overall variation than those of the workpiece W of the types A and B, resulting in no disturbance of striations in the cutting surface.

From the above perspective, it has been proven that the processability (cutting properties) of the workpiece W is significantly dependent on the state and adhesion (surface properties) of the oxide film on the surface of the workpiece W and the magnitude of the oxidation reaction caused by the internal components of the workpiece W (internal characteristics), and can be determined on the basis of the temperature based on the infrared ray intensity. Therefore, the present applicant has set reference information for determining the processability of the workpiece W, taking into account the results of the above-described examinations conducted using the laser processing unit 20 and the infrared ray sensor 30.

That is, the reference information includes a first determination criterion (threshold) for determining the surface properties of the workpiece W and a second determination criterion (threshold) for determining the internal characteristics of the workpiece W. The first determination criterion includes information regarding at least one of the reference temperature range of the workpiece W and the variation in temperature, while the second determination criterion includes information indicating the degree of temperature rise of the workpiece W.

In the determination of the processability, specifically, in the laser processing device 100, the laser processing unit 20 repeatedly irradiates the inside of the raw material of the workpiece W with the laser beams LB under the determination irradiation conditions in the processability determination process. The arithmetic calculation processing unit 63 (feature extraction unit 68) extracts the temporal change in the temperature of the workpiece W as the feature information on the basis of the time-series data of the infrared ray intensity measured by the infrared ray sensor (measurement unit) 30. For example, the reference information stored in the storage unit 61 includes determination criteria indicating the degree of temperature rise of the workpiece W. The determination unit 66 determines the processability of the workpiece W on the basis of whether or not the temporal change in the temperature of the workpiece W included in the feature information stored in the storage unit 61 is in a state of temperature rise that deviates from the determination criteria, for example. In the laser processing device 100, the laser processing unit 20 irradiates the raw material surface of the workpiece W with the laser beams LB while moving the irradiation position under the determination irradiation conditions in the processability determination process. The arithmetic calculation processing unit 63 (feature extraction unit 68) extracts the positional change in the temperature of the workpiece W as the feature information on the basis of the time-series data of the infrared ray intensity measured by the infrared ray sensor (measurement unit) 30. For example, the reference information stored in the storage unit 61 includes determination criteria based on at least one of the reference temperature range of the workpiece W and the variation in temperature. The determination unit 66 determines the processability of the workpiece W depending on whether the positional change in the temperature of the workpiece W included in the feature information stored in the storage unit 61 meets the determination criteria, for example.

Furthermore, in the laser processing device 100, the determination irradiation conditions include the first irradiation conditions and the second irradiation conditions, and the laser processing unit 20 irradiates the raw material surface of the workpiece W with the laser beams LB while moving the irradiation position under the first irradiation conditions and repeatedly irradiates the inside of the raw material of the workpiece W with the laser beams LB under the second irradiation conditions in the processability determination process. In addition, the infrared ray sensor (measurement unit) 30 measures the first infrared ray intensity of the infrared ray (radiation light) generated when the workpiece W is irradiated with the laser beams LB under the first irradiation conditions, and the second infrared ray intensity of the infrared ray (radiation light) generated when the workpiece W is irradiated with the laser beams LB under the second irradiation conditions. Moreover, the arithmetic calculation processing unit 63 (feature extraction unit 68) extracts the first feature information indicating the positional change in the temperature of the workpiece W on the basis of the time-series data of the first infrared ray intensity measured by the infrared ray sensor (measurement unit) 30, and extracts the second feature information indicating the temporal change in the temperature of the workpiece W on the basis of the time-series data of the second infrared ray intensity measured by the infrared ray sensor (measurement unit) 30. Furthermore, the determination unit 66 compares the first feature information with the first determination criterion (threshold) included in the reference information and compares the second feature information with the second determination criterion (threshold) included in the reference information, determining the processability of the workpiece W on the basis of the combination of the results. The storage unit 61 stores the first feature information and the second feature information extracted by, for example, the arithmetic calculation processing unit 63 (feature extraction unit 68).

In order to accurately determine the internal characteristics of the workpiece W, it is preferable that the laser processing unit 20 irradiates the inside of the raw material of the workpiece W with the laser beams LB under the second irradiation conditions, after irradiating the raw material surface of the workpiece W with the laser beams LB under the third irradiation conditions to perform surface modification of the workpiece W. Here, the surface modification of the workpiece W is performed, for example, to remove the surface of the workpiece W with an average depth of 0.05 mm to 1.5 mm and an average roughness of 10 µm or less by irradiating with the laser beams LB under the third irradiation conditions, and to remove the oxide film.

Accordingly, the laser powers under the first, second, and third irradiation conditions of the laser beams LB emitted by the laser processing unit 20 are set to be smaller than the laser power included in the processing irradiation conditions, the laser powers under the first and second irradiation conditions are set to be smaller than the laser power under the third irradiation conditions, and the laser power under the first irradiation conditions is set to be smaller than the laser power under the second irradiation conditions.

Specifically, the standard processing conditions (standard conditions) for laser cutting processing are set with each parameter item such as laser power of 1000 (W), processing speed of 900 to 1000 (mm/min), (pulse) frequency of 1000 (Hz), (pulse) duty (pulse width) of 75 (%), gas type of O₂, gas pressure of 0.06 (MPa), nozzle gap of 1 (mm), and ACL of 70, according to the thickness of the workpiece W. The ACL is a parameter related to the beam diameter when converting the laser beams LB to collimated light, the parameter acting so that the larger the numerical value is, the larger the beam diameter of the collimated light is, and the larger the beam diameter of the collimated light is, the smaller the beam spot diameter is.

On the other hand, the first irradiation conditions of the laser beams LB are set with each parameter item such as laser power of 125 (W), processing speed of 500 (mm/min), (pulse) frequency of 100 (Hz), (pulse) duty (pulse width) of 100 (%), gas pressure of 0.04 (MPa), nozzle gap of 50 (mm), nozzle of D2.5W, gas type of O₂, lens focal length of 190 (mm), ACL of 120, B-axis of 25 (mm), and laser irradiation diameter of 5.9 (Φ), and for example, laser scanning is performed over a distance of 80 mm at the above-described processing speed to determine the surface condition of the material of the workpiece W (adhesion or peeling state of the oxide film) on the basis of the temperature characteristics.

The second irradiation conditions of the laser beams LB are set with each parameter item such as laser power of 400 (W), processing speed of 0 (mm/min), (pulse) frequency of 10 (Hz), (pulse) duty (pulse width) of 50 (%), gas pressure of 0.01 (MPa), nozzle gap of 50 (mm), nozzle of D2.5W, gas type of O₂, lens focal length of 190 (mm), ACL of 140, B-axis of 25 (mm), and laser irradiation diameter of 6.5 (Φ), and for example, laser scanning is performed by spot irradiation to determine the internal condition of the material of the workpiece W (oxidation reaction heat and thermal conduction) on the basis of the temperature characteristics.

The third irradiation conditions of the laser beams LB are set with each parameter item such as focal position located on the raw material surface, laser power of 700 (W), processing speed of 10000 (mm/min), (pulse) frequency of 10000 (Hz), (pulse) duty (pulse width) of 40 (%), gas pressure of 0.1 (MPa), nozzle gap of 5 (mm), nozzle of D2.5W, gas type of O₂, and lens focal length of 190 (mm), and for example, under a state in which the laser power is higher than the laser power of each of the first and second irradiation conditions, the surface modification (removal of the oxide film) of the material of the workpiece W is performed.

The energy density of the laser beams LB used for irradiation under the first irradiation conditions is 1 W/mm² or more and less than 5 W/mm², and the energy density of the laser beams LB used for irradiation under the second irradiation conditions is 5 W/mm² or more and 10 W/mm² or less. The reasons why the first irradiation conditions are set as described above to determine the surface properties of the workpiece W are as follows.

That is, through the above-described examinations 1 to 3, it has been found that the oxide film with weak adhesion tends to peel off from the raw material surface during laser cutting, making it easy for notches to be formed in the cutting surface. Therefore, the adhesion is predicted by laser scanning on the basis of the behavior of temperature changes. To accurately evaluate the state of the raw material surface of the workpiece W, the depth of thermal penetration by the laser is minimized, and thermal stress is generated by heating and cooling the oxide film on the raw material surface of the workpiece W. When the energy density of the laser beams LB used for the irradiation is too strong, the influence of the internal components of the material will also appear, so it is assumed that an energy density of 1 W/mm² or more and less than 5 W/mm² is sufficient for the purpose of loading thermal stress. When the oxide film peels off due to laser irradiation, it emits light as a spatter and becomes high temperature, so conversely, the portions where the oxide film on the raw material surface has already peeled off in the raw material state will have a lower temperature due to the smaller laser absorption rate. According to the knowledge of the present applicant, it has found that when the adhesion of the oxide film to the raw material surface is good, the temperature stabilizes within a certain specific temperature range. When the irradiation area (laser irradiation diameter) of the laser beams LB is large, the state change in the oxide film will be averaged by laser scanning, resulting in smaller temperature change behavior, making it difficult to see the differences in surface conditions. Also, when the irradiation area is small, it is necessary to simultaneously reduce the laser power, which can lead to instability in the laser power. For these reasons, when determining the surface properties of the workpiece W, for example, the laser power was set to 125 (W) and the irradiation area (laser irradiation diameter) was set to approximately 5.9 (Φ).

In addition, the reasons why the second irradiation conditions are set as described above to determine the internal characteristics of the workpiece W are as follows.

That is, through the above-described first to third examinations, it has been found that the quality of the material processability (cutting properties) of the workpiece W can be determined by evaluating the thermal conductivity of the material from the behavior of temperature changes. For example, iron (Fe) is a material that undergoes magnetic transformation at the temperature around 800°C, phase transformation at the temperature around 900°C, and melts at the temperature around 1500°C, so the thermal conduction and specific heat change at these temperatures. Therefore, it is necessary to set the temperatures so as not to exceed these temperatures as much as possible in order to analyze the thermal conductivity within the material of the workpiece W. From this, the energy density of the laser irradiation was set to be 5 W/mm² or more and 10 W/mm² or less. In addition, this energy density is sufficiently weak compared to the energy density of the laser irradiation required for laser cutting processing, making the laser power (power) prone to instability. Therefore, the irradiation area (laser irradiation diameter) was set larger to adjust the laser power (power).

Then, in order to evaluate the thermal conduction of the material, it has been found that evaluating the cooling temperature when the laser irradiation is turned off yields results that strongly reflect the thermal conductivity of the material, rather than evaluating the reached temperature by heating from laser irradiation. That is, the behavior of temperature changes due to heating from laser irradiation is influenced not only by thermal conductivity but also by factors such as the laser absorption rate of the material surface, making it unsuitable for evaluating thermal conduction. On the other hand, regarding cooling, even if the energy of the laser irradiation is small, the thermal conductivity of steel is relatively large, so it cools from high temperature to near room temperature in about one cycle (100 ms). Therefore, it is assumed that a cooling time of around 50 ms is appropriate to evaluate the magnitude of the cooling reaching temperature of the material. In addition, to accurately evaluate the behavior of temperature changes in cooling temperature due to repeated heating and cooling, the (pulse) frequency was set to 10 (Hz) and the (pulse) duty (pulse width) to 50 (%). Also, when the gas pressure of the assist gas is too high, the cooling rate becomes too fast, so the gas pressure was set to 0.01 (MPa) for the purpose of preventing spattering to the protective glass. Since the heating temperature itself by laser irradiation is low, the amount of oxidation heat generated is reduced, so the type of the assist gas can be either oxygen (O₂) or nitrogen (N₂).

From the above perspective, the present applicant has set, as the first determination criterion (threshold) for determining the surface properties of the workpiece W, for example, whether the data components in the feature information 331, 341, 351 obtained by laser scanning at a predetermined distance are 40% or less in the temperature range of 450°C to 800°C, or whether the standard deviation in that temperature pattern is 100°C or more. The surface properties are considered poor quality when they are 40% or less in the temperature range, or when the standard deviation is 100°C or more, indicating a poor state of the oxide film. In addition, as the second determination criterion (threshold) for determining the internal characteristics of the workpiece W, setting was made, of, for example, whether the time period from the start of cooling by repeated heating and cooling to reach the cooling reaching temperature was 2.5 seconds or more. For the internal characteristics, when the time period is 2.5 seconds or more, it is determined that the thermal conduction is small and the quality is good. The first and second determination criteria are not limited to these.

For example, the first determination criterion may also be compared with the total accumulated time in the range of 450°C to 800°C for the measured temperature with an accumulation time of 1 ms when the laser is scanned for 10 seconds at a laser power of 150 (W) and a processing speed of 100 (mm/s) with an irradiation area (laser irradiation diameter) of 6.5 (Φ). When this total accumulated time is shorter than the first determination criterion, it can be determined that the state of the oxide film is poor, and when it is longer, it can be determined that the adhesion of the oxide film is good. Alternatively, for example, the first determination criterion may be compared with the standard deviation of the temperature data measured for an accumulation time of 1 ms. When this standard deviation is larger than the first determination criterion, it can be determined that the state of the oxide film is poor, and when it is smaller, it can be determined that the adhesion of the oxide film is good.

Furthermore, for example, the second determination criterion may be compared with the time period to reach 300°C from the start of cooling after turning off the laser irradiation following spot heating up to a temperature of 800°C by the laser irradiation. When the reaching time period is shorter than the second determination criterion, it can be determined that the internal characteristics are good, and if it is longer, it can be determined that the cutting surface becomes rough. The second determination criterion may also be compared with the cooling temperature after 50 ms from turning off the laser irradiation. When the cooling temperature is lower than the second determination criterion, it can be determined that the internal characteristics are good, and when it is higher, it can be determined that the quality of the cutting is poor. Note that the reference information (first determination criterion, second determination criterion) can be changed and set as appropriate by the operator.

### [Processing Flow of Processability Determination Device]

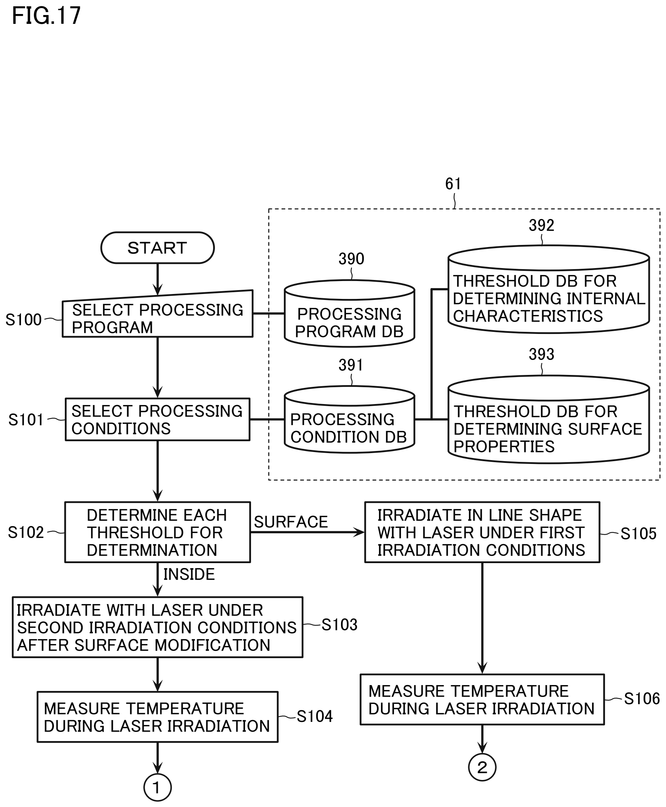

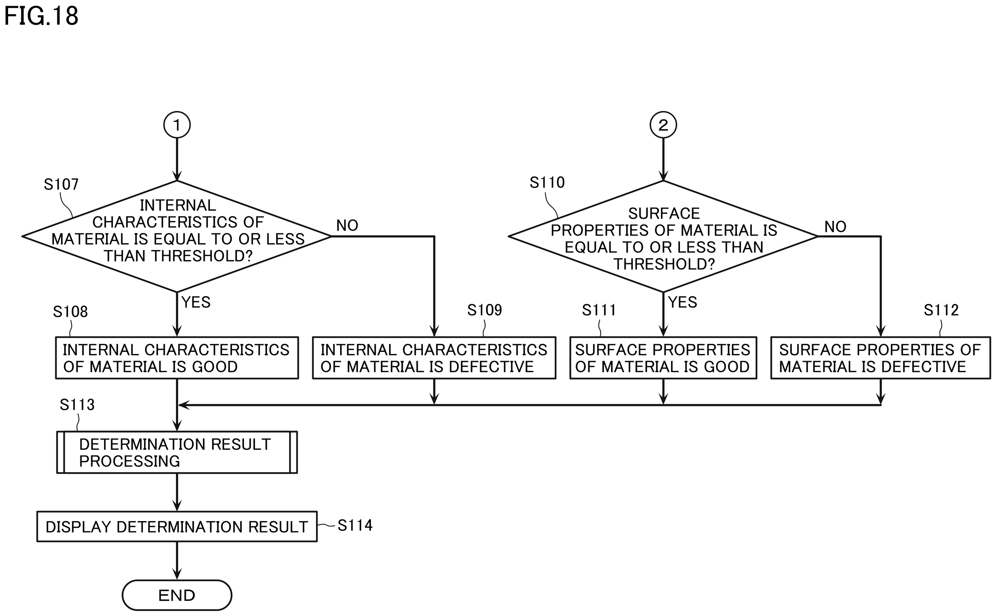

Figures 17 and 18 each are a flowchart illustrating an example of a processability determination processing flow of the processability determination device.

As illustrated in Figure 17, when the processability determination processing is started in the laser processing device 100, first, a processing program necessary for the control unit 64 is selected and read from a processing program database (DB) 390 in the storage unit 61 in the NC device 60 (step S100). Next, the processing conditions selected by the processing program are read from a processing condition database (DB) 391 in the storage unit 61 (step S101), and the threshold (second determination criterion) for determining the internal characteristics of a workpiece W to which the processing conditions are applied and the threshold (first determination criterion) for determining the surface properties of the workpiece W are loaded from a threshold database (DB) 392 for determining the internal characteristics and a threshold database (DB) 393 for determining the surface properties in the storage unit 61, and are set in the control unit 64 and the arithmetic calculation processing unit 63 respectively.

Then, in the arithmetic calculation processing unit 63, each threshold for determination is determined (step S102), and in the internal (characteristic) determination processing, after irradiating the workpiece W with the laser beams LB under the third irradiation conditions to perform the surface modification, the surface modified portion of the workpiece W is irradiated with the laser beams LB under the second irradiation conditions (step S103), and the temperature based on the infrared rays of the radiation light during the laser irradiation is measured by the infrared ray sensor 30 (step S104). In the surface (property) determination processing, the workpiece W is irradiated with the laser beams LB under the first irradiation conditions (step S105), and the temperature based on the infrared rays of the radiation light during the laser irradiation is measured by the infrared ray sensor 30 (step S106). The above-described internal determination processing and surface determination processing may be performed in parallel, or one may be performed first and the other later.

As illustrated in Figure 18, the arithmetic calculation processing unit 63 inputs the time-series data of the temperature measured in step S104 described above and extracts feature information (second feature information) indicating the temporal change in the temperature of the workpiece W. The determination unit 66 determines, for example, whether or not the internal characteristics of the material are equal to or less than the threshold by comparing the extracted feature information (second feature information) with the set threshold for determining the internal characteristics (step S107). In addition, the arithmetic calculation processing unit 63 inputs the time-series data of the temperature measured in step S106 described above and extracts feature information (first feature information) indicating the positional change in the temperature of the workpiece W. The determination unit 66 determines, for example, whether or not the surface properties of the material are equal to or less than the threshold by comparing the extracted feature information (first feature information) with the set threshold for determining the surface properties (step S110).

If it is determined in step S107 described above that the internal characteristics are equal to or less than the threshold (YES in step S107), it is determined that the internal characteristics of the material of the workpiece W are good (step S108). On the other hand, if it is determined in step S107 described above that the internal characteristics are not equal to or less than the threshold (NO in step S107), it is determined that the internal characteristics of the material of the workpiece W are defective (step S109).

If it is determined in step S110 described above that the surface properties are equal to or less than the threshold (YES in step S110), it is determined that the surface properties of the material of the workpiece W are good (step S111). On the other hand, if it is determined in step S110 described above that the surface properties are not equal to or less than the threshold (NO in step S110), it is determined that the surface properties of the material of the workpiece W are defective (step S112).

Then, the determination unit 66 performs the determination result processing of the processability of the workpiece W on the basis of the results of either of steps S108 and S109 described above, and the results of either of steps S111 and S112 described above (step S113). That is, in the case of the combination of steps S108 and S111 described above, since the internal characteristics (the magnitude of the oxidation reaction due to internal components) are good and the surface properties (the state and adhesion of the oxide film) are good, for example, a determination result is obtained that the processability of the workpiece W is good. Also, apart from that, in the case of the combination of steps S108 and S112 described above, the internal characteristics are good but the surface properties are defective, and in the case of the combination of steps S109 and S111 described above, the internal characteristics are defective but the surface properties are good, and in the case of the combination of steps S109 and S112 described above, both of the internal characteristics and surface properties are defective, so in these cases, a determination result is obtained that the processability of the workpiece W is defective.

The thus obtained determination result of the processability of the workpiece W is reported to the operator by being displayed on the display unit 62 by the reporting unit 67 and so on (step S114), thereby completing a series of processes according to this flowchart. As described above, in the laser processing device 100 according to the first embodiment, when the operator performs the product processing, the processability based on the processing conditions of the workpiece W is determined and reported to the operator before the processing in this way, so the operator can grasp in advance before the processing whether or not the processing conditions suitable for the material characteristics of the workpiece W can be applied. Then, on the basis of the reported determination result, the operator can easily determine whether to perform the processing under the pre-set processing conditions or to change to processing conditions suitable for the workpiece, thereby making it possible to reduce the processing defects.

### [Second Embodiment]

Next, a second embodiment will be described. In the first embodiment, the processability when the workpiece W to be processed is mild steel has been determined, but in the second embodiment, the processability when the workpiece W to be processed is stainless steel will be determined. A processability determination device, a processability determination method, and a processability determination program according to the second embodiment are different from the laser processing device 100 of the first embodiment described earlier, but most of the basic configuration, schematic configuration, functional configuration, and hardware configuration described above are similar. Therefore, unless specifically mentioned below, the same reference signs will be assigned to the components that overlap with the first embodiment, and the explanations that overlap with already explained components will be omitted.

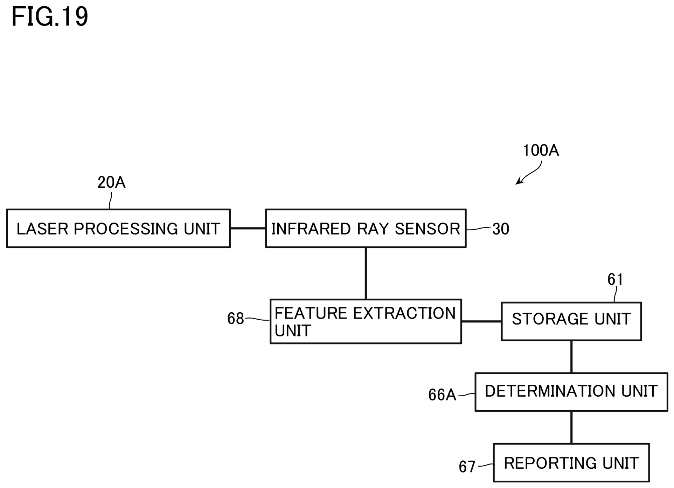

Figure 19 is a block diagram illustrating a basic configuration of the processability determination device according to the second embodiment of the present invention.

A laser processing device 100A according to the second embodiment includes, for example, as illustrated in Figure 19, a laser processing unit 20A capable of executing a processing process of irradiating a workpiece W with laser beams LB under processing irradiation conditions to process the workpiece W, and a processability determination process of irradiating the workpiece W with the laser beams LB under determination irradiation conditions that the laser beams LB do not penetrate a raw material of the workpiece W to determine processability of the workpiece W, an infrared ray sensor (measurement unit) 30 configured to measure infrared ray intensity of radiation light generated when the workpiece W is irradiated with the laser beams LB under the determination irradiation conditions, a feature extraction unit 68 configured to extract feature information indicating temporal changes in temperature of the workpiece W on the basis of time-series data of the infrared ray intensity measured by the infrared ray sensor (measurement unit) 30, a determination unit 66A configured to determine the processability of the workpiece W when the workpiece W is processed under preset processing conditions by the laser processing unit 20A on the basis of the extracted feature information and reference information for determining the processability of the workpiece W that has been pre-recorded, a reporting unit 67 configured to report a determination result determined by the determination unit 66A, and a storage unit 61 configured to store the feature information and the reference information.

The workpiece W in the second embodiment, for example, when it is stainless steel, contains iron (Fe) as the main component and generally contains chromium (Cr) in a mass fraction of 11 (11 mass%) or more. The workpiece W contains various alloy elements and inevitably mixed impurities according to its application, in addition to this main component.

### [Processability Determination Method]

Next, a processability determination method using the processability determination device will be described.

The present inventors processed (performed laser cutting on) various stainless steel workpieces W under standard processing conditions of the NC device 60 (see Figures 2 and 3) and measured dross of the workpiece W. As a result, it has been found that the processability of the workpiece W (presence or absence of dross, dross height, etc.: hereinafter referred to as "processability (dross)") is greatly influenced by the characteristics of the components of the workpiece W (characteristics in the raw material: internal characteristics).

Note that the "dross" refers to deposition of the metal or oxides that have melted and adhered to the lower surface of the cut material, and is synonymous with slag. In determining the presence or absence of dross, the allowable value for the height of dross (magnitude of dross) from the plate surface of the workpiece W for determining the presence or absence of dross may be appropriately set according to the thickness of the workpiece W, for example.

Here, the internal characteristics of the stainless steel workpiece W specifically refer to the magnitude of thermal conduction by the internal components of the workpiece W, phase transformation, and melting point, etc. For example, materials with high thermal conduction tend to diffuse heat easily, the temperature rise by the laser heat input at the processing point is insufficient, and the temperature of the molten metal becomes low, leading to high viscosity. As a result, the molten metal becomes difficult to be discharged, resulting in an increase in dross formation.

For example, ferritic stainless steel has a high thermal conduction, making this tendency stronger. In addition, duplex stainless steel contains a ferrite phase with high thermal conduction, and due to the latent heat effects from phase transformation at high temperatures, the temperature at the laser processing point does not rise easily, resulting in large dross formation. In addition, those containing sulfur (S) to improve the machinability produce dross because the discharge of molten metal is difficult in the temperature region of the high-viscosity solid-liquid coexistence region to widen the solid-liquid coexistence temperature region.

Then, a fourth examination was conducted to analyze the internal characteristics such as differences in thermal conduction, phase transformation, and melting point of the stainless steel workpiece W. In the fourth examination, heating and cooling were repeatedly performed by performing spot irradiation on the inside of the raw material of the workpiece W with the laser beams LB, and the internal characteristics such as differences in thermal conduction, phase transformation, and melting point were analyzed on the basis of the temporal changes in temperature. Note that the laser cutting processing was performed on the basis of the processing conditions of laser power of 8500 W, cutting speed of 6500 mm/min, and nitrogen (N₂) as assist gas.

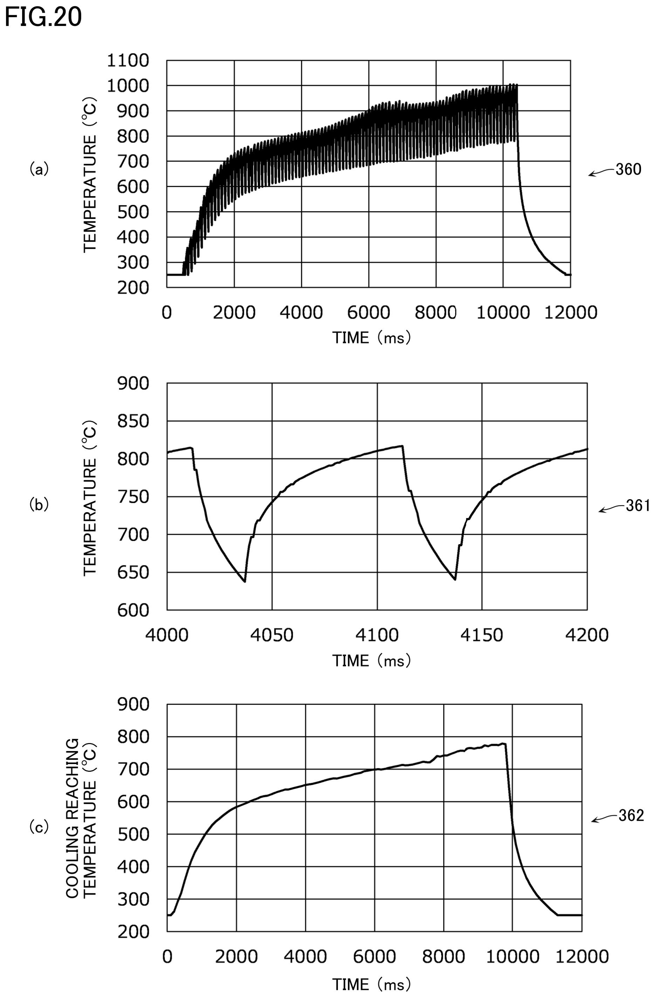

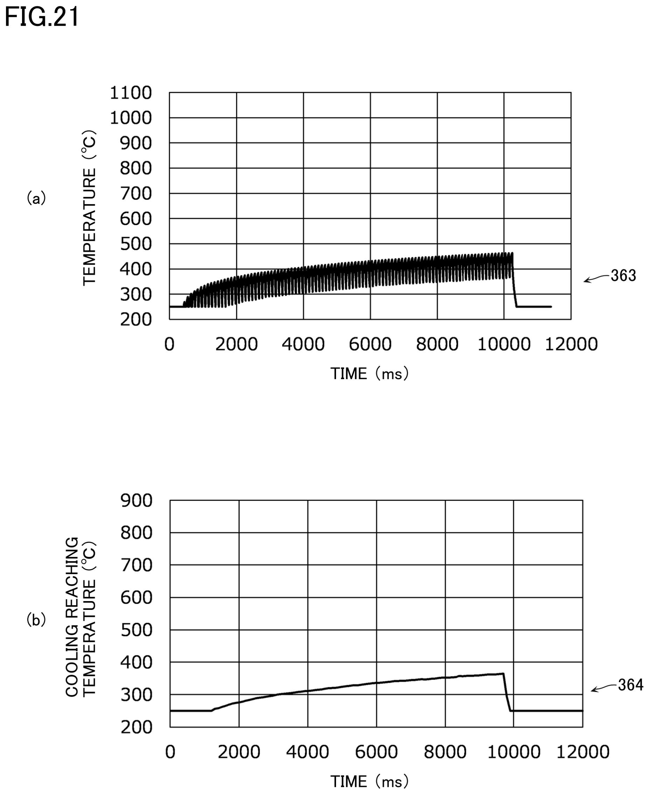

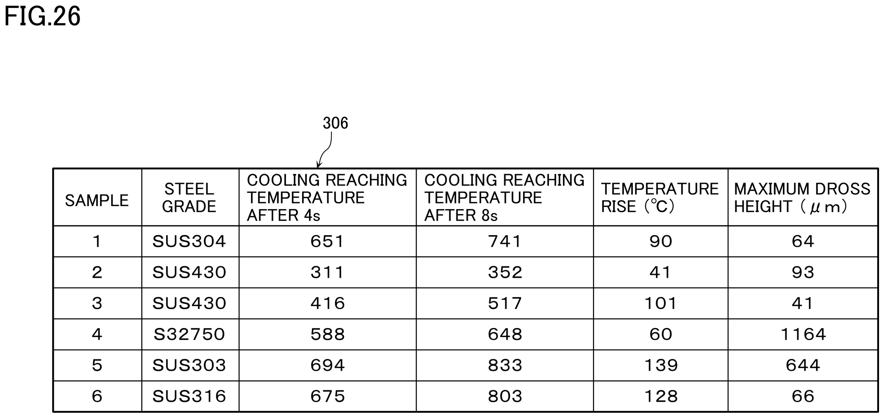

Figure 20 is a graph showing each of the relationship between temperature and time and the relationship between the cooling reaching temperature and time when heating and cooling are repeatedly applied to a workpiece by the processability determination device according to the second embodiment of the present invention. Figures 21 to 25 each are a graph showing each of the relationship between temperature and time and the relationship between the cooling reaching temperature and time when heating and cooling are repeatedly applied to the workpiece. Figure 26 is a result table showing, for each workpiece, examination results of features of temporal changes in cooling reaching temperature and the magnitude of dross.

As shown in the result table 306 of Figure 26, samples 1 to 6 as workpieces W are sheet metals made of stainless steel and each having a thickness of 6 mm, and the respective steel grades are SUS304, SUS430, SUS430, S32750, SUS303, and SUS316. Figure 26 also shows cooling reaching temperatures, a temperature rise value, and a maximum dross height for each of the samples 1 to 6.

Figure 20 shows the relationship between each temperature described above and time for the sample 1 (SUS304). Figure 20(a) shows a temperature waveform 360 obtained by measuring the sample 1 with the infrared ray sensor 30 and converting the time-series data of the infrared ray intensity output from the infrared ray sensor 30 into the time-series data of the temperature. In Figure 20(a), the vertical axis represents the temperature (°C), and the horizontal axis represents the time (milliseconds: ms).

In the fourth examination, as the determination irradiation conditions, the laser power of the laser beams LB with which the inside of the raw material of the workpiece W having a thickness of 6 mm was spot irradiated was set to 380 W, frequency to 10 Hz, and duty to 75%, and heating was repeatedly performed 10 times per second. Figure 20(b) is a graph showing a temperature waveform 361 corresponding to two cycles of the temperature waveform 360 enlargedly shown by rescaling the time axis in Figure 20(a) in milliseconds.

As illustrated in Figures 20(a) and (b), it can be seen that, during 10 seconds from the irradiation start of the laser beams LB, the temperature waveforms 360 and 361 of the workpiece W fluctuate finely (repetition of heat generation and heat dissipation) between approximately 300°C and approximately 1000°C over time by multiple cycles of laser irradiation.

Figure 20(c) is a waveform graph showing a lower envelope of the temperature waveform 360 formed by repeated heating and cooling as indicated in Figure 20(a). This waveform graph is obtained by extracting the temporal transition of the cooling reaching temperature for each cycle of the waveform graph in Figure 20(a) as feature information 362. This feature information 362 indicates temperature changes (degree of temperature rise) caused by the magnitude of thermal conduction of the workpiece W, phase transformation and melting and can be used for the subsequent determination evaluations. On the basis of this feature information 362, a determination criterion (first threshold) for the temperature rise value during the period (determination period) from 4 seconds to 8 seconds after the start of laser irradiation and determination criteria (second threshold and third threshold) for the reached temperature (cooling reaching temperature) at 8 seconds after the start of laser irradiation (after a predetermined time has elapsed: determination point) were set to determine the internal characteristics of the material of the workpiece W.

That is, the present applicant set the first threshold to 80°C, the second threshold to 400°C, and the third threshold to 820°C. Then, materials for which the temperature rise value during the period (determination period) from 4 seconds to 8 seconds after the start of laser irradiation was less than the first threshold (80°C) and the cooling reaching temperature at 8 seconds after the start of laser irradiation (determination point) was less than the second threshold (400°C) were classified as the group A.

Additionally, materials for which the temperature rise value during the period (determination period) from 4 seconds to 8 seconds after the start of laser irradiation was less than the first threshold (80°C) and the cooling reaching temperature at 8 seconds after the start of laser irradiation (determination point) was equal to or greater than the second threshold (400°C) were classified as the group B. Furthermore, materials for which the temperature rise value during the period (determination period) from 4 seconds to 8 seconds after the start of laser irradiation was equal to or greater than the first threshold (80°C) and the cooling reaching temperature at 8 seconds after the start of laser irradiation (determination point) was equal to or greater than the third threshold (820°C) were classified as the group C, and materials other than these were classified as the group D.

Then, the cutting properties (processability) of the workpiece W made of stainless steel was evaluated on the basis of the magnitude of the dross (dross height). In laser cutting processing, when cutting is performed with assist gas mainly containing non-oxidizing gas such as nitrogen (N₂), it has been found that, if the metal molten by the laser beams LB is not discharged by the assist gas, the molten metal solidifies and strongly adhered as dross below the cutting surface. Therefore, it becomes necessary to remove the dross in the subsequent process, which increases the number of processes, and thus it can be said that small dross formation is preferable.

Such evaluation of the magnitude of the dross was conducted, for example, by measuring the maximum dross height. In order to measure the dross, for example, a rectangular sample material with a width of 20 mm and a length of 80 mm was laser cut, and the dross was measured with a micrometer at three points on each of the two edges on the long side, and the maximum height (maximum dross height) among the dross heights at the six measurement points was used for evaluation.

As a result, among the materials classified into the groups A to D as described above, the materials with the highest maximum dross height were those of the groups B and C, followed by those of the group A. Then, since the materials of the group D had small dross and the lowest maximum dross height, it was found that the materials of the group D had the best cutting properties (processability). It should be noted that the other groups A to C were considered to have not good cutting properties (processability).

As illustrated in Figure 20(c), for the sample 1, the temperature measured 4 seconds (s) after the start of laser irradiation was 651°C, and the temperature at the determination point measured 8 seconds (s) after the start of laser irradiation was 741°C, resulting in a temperature rise value of 90°C (80°C or more) during the determination period from 4 seconds to 8 seconds after the start of laser irradiation. In addition, the maximum dross height for the sample 1 was 64 µm (see Figure 26).

Accordingly, the sample 1 can be said to be a material that has a temperature rise of 80°C or more during the determination period, and continues stable rise in temperature without significant inflection points. Then, since the sample 1 has the cooling reaching temperature of less than 820°C at the determination point, it has been found that the sample 1 is the material corresponding to the above-described group D.

The maximum dross height of the material of this group D is the lowest (smallest) compared to the materials of the other groups A to C. Note that the sample 1 reached a maximum reached temperature of about 1000°C by heating 10 seconds after the start of laser irradiation, and considering that the melting point of the sample 1 is around 1450°C, it is assumed that the temperature may have exceeded the melting point at the center of the laser irradiation.

Figure 21 shows the relationship between each temperature described above and time for the sample 2 (SUS430). Figure 21(a) shows a temperature waveform 363 obtained by measuring the sample 2 with the infrared ray sensor 30 and converting the time-series data of the infrared ray intensity output from the infrared ray sensor 30 into the time-series data of the temperature. The processing conditions and the determination irradiation conditions are the same as those for the sample 1. In addition, the feature information 364 is also the same as in Figure 20.

As illustrated in Figure 21(b), for the sample 2, the temperature measured 4 seconds (s) after the start of laser irradiation was 311°C, and the temperature at the determination point measured 8 seconds (s) after the start of laser irradiation was 352°C, resulting in a temperature rise of 41°C (less than 80°C) during the determination period from 4 seconds to 8 seconds after the start of laser irradiation. In addition, the maximum dross height for the sample 2 was higher (larger) compared to the sample 1, reaching 93 µm (see Figure 26).

Accordingly, the sample 2 can be said to be a material that has a temperature rise of less than 80°C during the determination period, and is the most difficult to cause a temperature rise by laser heating among the samples 1 to 6. Then, since the sample 2 has the cooling reaching temperature of less than 400°C at the determination point, it has been found that the sample 2 is the material corresponding to the above-described group A. The ferritic stainless steel of the sample 2 has a melting point of around 1500°C, which is relatively high among stainless steels, and it is assumed that the ferritic stainless steel has not reached the melting point by laser irradiation under the determination irradiation conditions.

The above-described results are considered to be obtained because this sample 2 has a larger thermal conduction and lower electrical resistance compared to austenitic stainless steel, resulting in a lower laser absorption rate, and further has the melting point higher than that of austenitic stainless steel by about 50°C. In any case, the sample 2 can be said to be a material that easily generates dross because the amount of heat required for the material to melt due to laser irradiation is insufficient, causing the temperature of the molten metal to decrease and its viscosity to increase.

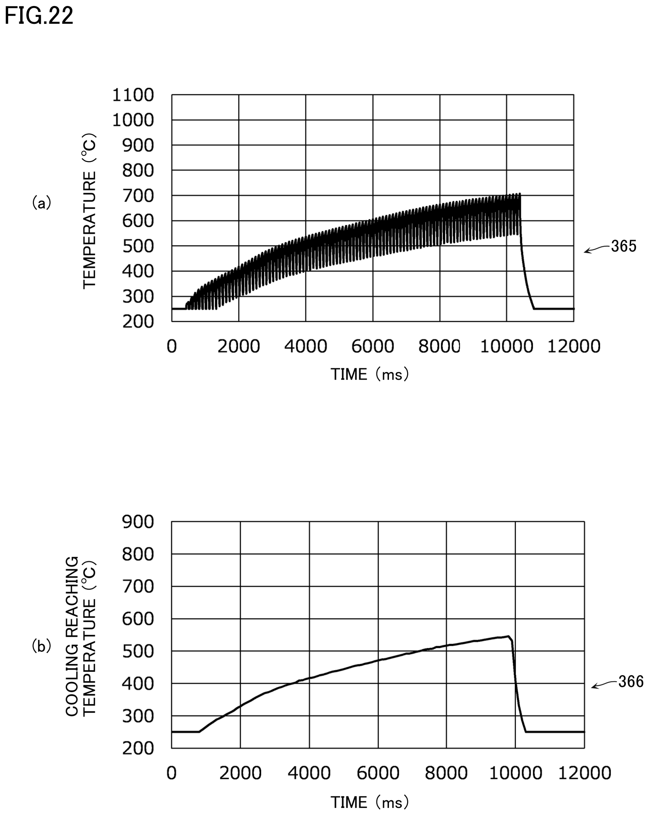

Figure 22 shows the relationship between each temperature described above and time for the sample 3 (SUS430). The sample 3 is the same SUS430 as the sample 2, but it is a sample from a different manufacturing lot. Figure 22(a) shows a temperature waveform 365 obtained by measuring the sample 3 with the infrared ray sensor 30 and converting the time-series data of the infrared ray intensity output from the infrared ray sensor 30 into the time-series data of the temperature. The processing conditions and the determination irradiation conditions are the same as those for the samples 1 and 2. In addition, the feature information 366 is also the same as in Figures 20 and 21.

As illustrated in Figure 22(b), for the sample 3, the temperature measured 4 seconds (s) after the start of laser irradiation was 416°C, and the temperature at the determination point measured 8 seconds (s) after the start of laser irradiation was 517°C, resulting in a temperature rise of 101°C (80°C or more) during the determination period from 4 seconds to 8 seconds after the start of laser irradiation. In addition, the maximum dross height for the sample 3 was 41 µm, showing the lowest (smallest) value (see Figure 26).

Accordingly, the sample 3 can be said to be a material that has a temperature rise of 80°C or more during the evaluation period, and a difference in the temporal change in the cooling reaching temperature compared to the sample 2, making it easy to cause a temperature rise despite being of the same material. Then, since the sample 3 has the cooling reaching temperature of less than 820°C at the determination point, it has been found that the sample 3 is the material corresponding to the above-described group D. It is considered that the sample 3 shows a decrease in viscosity because the temperature of the molten metal is higher than that of the sample 2, resulting in small dross formation.

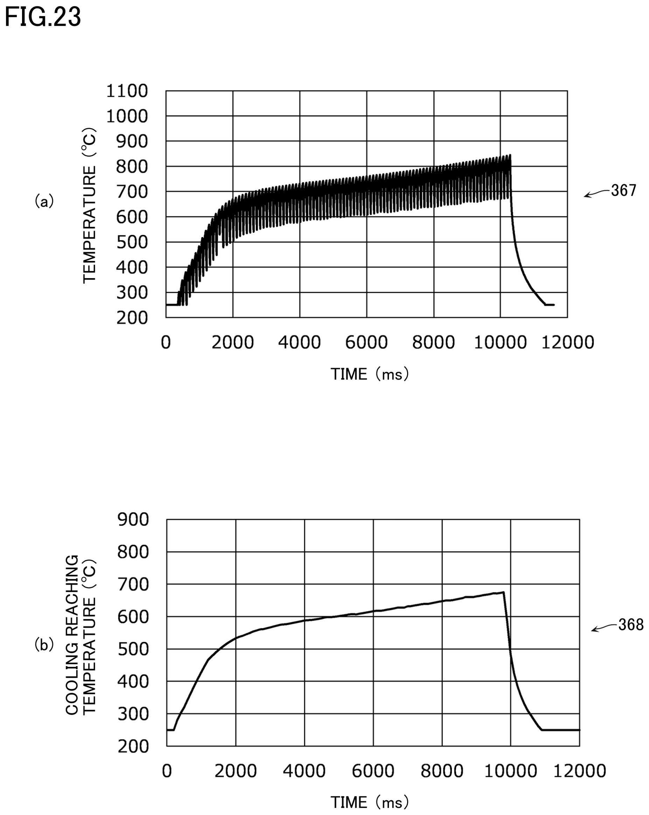

Figure 23 shows the relationship between each temperature described above and time for the sample 4 (S32750). Figure 23(a) shows a temperature waveform 367 obtained by measuring the sample 4 with the infrared ray sensor 30 and converting the time-series data of the infrared ray intensity output from the infrared ray sensor 30 into the time-series data of the temperature. The processing conditions and the determination irradiation conditions are the same as those for the samples 1 to 3. In addition, the feature information 368 is also the same as in Figures 20 to 22.

As illustrated in Figure 23(b), for the sample 4, the temperature measured 4 seconds (s) after the start of laser irradiation was 588°C, and the temperature at the determination point measured 8 seconds (s) after the start of laser irradiation was 648°C, resulting in a temperature rise of 60°C (less than 80°C) during the determination period from 4 seconds to 8 seconds after the start of laser irradiation. In addition, the maximum dross height for the sample 4 was 1164 µm, showing the highest (largest) value (see Figure 26).

Accordingly, the sample 4 can be said to be a material that has a temperature rise of less than 80°C during the evaluation period, and is characterized by a temporal change in cooling reaching temperature in which the temperature easily rises immediately after laser irradiation because of made of duplex stainless steel, but the temperature rise slows down in the intermediate temperature region. Then, since the sample 4 has the cooling reaching temperature of 400°C or more at the determination point, it has been found that the sample 4 is the material corresponding to the above-described group B.

The sample 4 is made of duplex stainless steel that includes an austenitic phase, so it has slightly lower thermal conduction and higher electrical resistance, resulting in a higher laser absorption rate, and it is considered that the initial temperature rise by laser irradiation is rapid. In addition, a region where the temperature rise stagnates in the intermediate temperature region is considered to exist because the phase transformation latent heat resulting from the fact that a part of the ferrite phase is transformed into the austenitic phase in this temperature region makes it difficult to cause temperature rise.

For example, considering that the maximum reached temperature by heating 10 seconds after the start of laser irradiation is equal to or less than 900°C and the melting point of the sample 4 is around 1500°C, it is considered that the temperature of the sample 4 has not reached the melting point by laser irradiation. In addition, the amount of heat required for melting is also large due to the influence of the latent heat by the phase transformation, making it difficult for the temperature of the molten metal to rise by the heat input from the laser, resulting in an increase in viscosity. Therefore, the sample 4 can be said to be a material that is prone to dross adhesion.

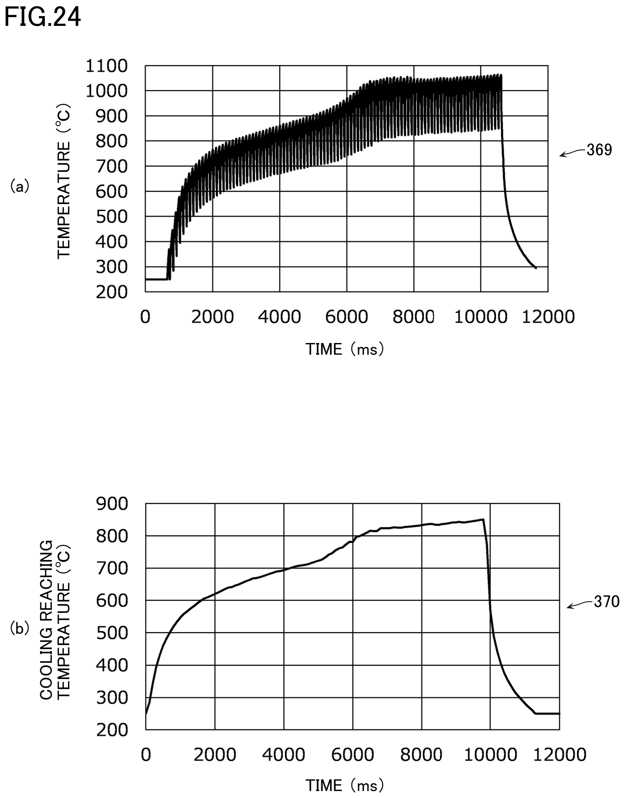

Figure 24 shows the relationship between each temperature described above and time for the sample 5 (SUS303). Figure 24(a) shows a temperature waveform 369 obtained by measuring the sample 5 with the infrared ray sensor 30 and converting the time-series data of the infrared ray intensity output from the infrared ray sensor 30 into the time-series data of the temperature. The processing conditions and the determination irradiation conditions are the same as those for the samples 1 to 4. In addition, the feature information 370 is also the same as in Figures 20 to 23.

As illustrated in Figure 24(b), for the sample 5, the temperature measured 4 seconds (s) after the start of laser irradiation was 694°C, and the temperature at the determination point measured 8 seconds (s) after the start of laser irradiation was 833°C, resulting in a temperature rise of 139°C (80°C or more) during the determination period from 4 seconds to 8 seconds after the start of laser irradiation. In addition, the maximum dross height for the sample 5 was 644 µm, showing the highest (largest) value next to that for the sample 4 (see Figure 26).

Accordingly, the sample 5 can be said to be a material that has a temperature rise of 80°C or more during the determination period, making it easy to cause a temperature rise by laser irradiation with a significant inflection point in the high-temperature region. Then, since the sample 5 has the cooling reaching temperature of 820°C or more at the determination point, it has been found that the sample 5 is the material corresponding to the above-described group C. For the sample 5, since the maximum reached temperature by heating 7 seconds after the start of laser irradiation exceeds 1000°C, and the temperature rise also stagnates, it is considered that melting has started in the center of the laser irradiation in this region.

In addition, the inflection point around 7 seconds after the start of laser irradiation is considered to be related to the latent heat associated with melting, and thus, the sample 5 can be said to be a material that starts melting quickly. Then, the sample 5 is a material that contains a large amount of sulfur (S) to improve the machinability, and therefore, it is considered that a temperature region in which solid and liquid coexist from when the melting start temperature is lowered until melting is fully completed is wide. When this solid-liquid coexistence region is widened, it is estimated that the stagnation of temperature rise has been caused in this region, and since the viscosity of the material is very high in the solid-liquid coexistence region, it becomes difficult for the molten metal to be discharged. Therefore, the sample 5 can be said to be a material that produces large dross formation.

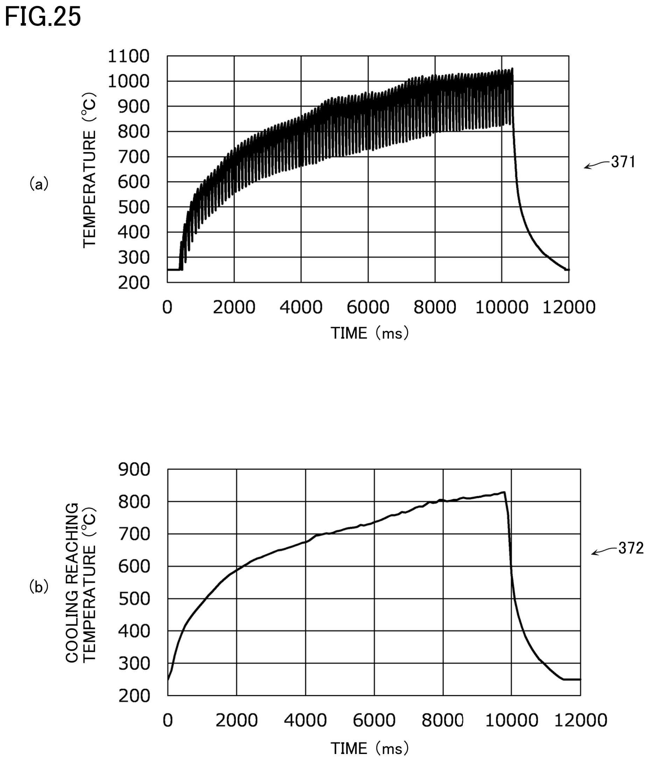

Figure 25 shows the relationship between each temperature described above and time for the sample 6 (SUS316). Figure 25(a) shows a temperature waveform 371 obtained by measuring the sample 6 with the infrared ray sensor 30 and converting the time-series data of the infrared ray intensity output from the infrared ray sensor 30 into the time-series data of the temperature. The processing conditions and the determination irradiation conditions are the same as those for the samples 1 to 5. In addition, the feature information 372 is also the same as in Figures 20 to 24.

As illustrated in Figure 25(b), for the sample 6, the temperature measured 4 seconds (s) after the start of laser irradiation was 675°C, and the temperature at the determination point measured 8 seconds (s) after the start of laser irradiation was 803°C, resulting in a temperature rise of 128°C (80°C or more) during the determination period from 4 seconds to 8 seconds after the start of laser irradiation. In addition, the maximum dross height for the sample 6 was 66 µm (see Figure 26).

Accordingly, the sample 6 can be said to be a material that has a temperature rise of 80°C or more during the evaluation period, and is made of austenitic stainless steel containing relatively large number of alloying elements such as nickel (Ni), having high electrical resistance and a large laser absorption rate, making it easy to cause a temperature rise by laser irradiation. Then, since the sample 6 has the cooling reaching temperature of less than 820°C at the determination point, it has been found that the sample 6 is the material corresponding to the above-described group D.

Note that the sample 6 reached a maximum reached temperature of about 1000°C by heating 10 seconds after the start of laser irradiation, and considering that the melting point of the sample 6 is around 1400°C, the raw material surface may have started to melt in the center of the laser irradiation. Since the sample 6 has a large temperature rise during the determination period, and a small solid-liquid coexistence region, the temperature steadily rises to the melting region without a significant inflection point. Therefore, the sample 6 can be said to be a material that produces a small dross formation.

From the above perspective, the processability (dross) of the stainless steel workpiece W is greatly dependent on the internal characteristics such as the magnitude of thermal conduction by the internal components of the workpiece W, phase transformation, and melting, and it has been proven that the processability (dross) can be determined on the basis of the temperature based on the infrared ray intensity. Therefore, the present applicant has set the reference information (determination criteria) for determining the processability of the stainless steel workpiece W as described above, taking into account the results of the fourth examination conducted using the laser processing unit 20 and the infrared ray sensor 30.

In the determination of the processability of the stainless steel workpiece W, specifically, in the laser processing device 100A, the laser processing unit 20A repeatedly irradiates the workpiece W with the laser beams LB under the determination irradiation conditions in the processability determination process (for example, spot irradiation). When the workpiece W is made of stainless steel, for example, the reference information stored in the storage unit 61 includes the determination criteria based on the temperature rise value of the workpiece W during a predetermined period (from 4 seconds to 8 seconds) after the irradiation start of laser beams LB, and the cooling reaching temperature of the workpiece W after an elapse of a predetermined time (8 seconds) from the irradiation start of laser beams LB.

The determination unit 66A specifically determines the processability of the workpiece W on the basis of whether or not the temperature rise value of the workpiece W and the cooling reaching temperature of the workpiece W included in the feature information stored in the storage unit 61 meet the determination criteria, for example.

The standard processing conditions (standard conditions) for laser cutting processing are more specifically set with each parameter item such as laser power of 8500 (W), processing speed of 6500 (mm/min), (pulse) frequency of 300 (Hz), (pulse) duty (pulse width) of 100 (%), gas type of N₂, gas pressure of 1.0 (MPa), nozzle gap of 0.3 (mm), and ACL of 80 according to the thickness of the stainless steel workpiece W.

In addition, the determination irradiation conditions for the laser beams LB on the stainless steel workpiece W are set with each parameter item such as laser power of 380 (W), processing speed of 0 (mm/min), (pulse) frequency of 10 (Hz), (pulse) duty (pulse width) of 75 (%), gas pressure of 0.01 (MPa), nozzle gap of 50 (mm), nozzle of D7.0AL, gas type of N₂, lens focal length of 190 (mm), ACL of 140, B-axis of 25 (mm), and laser irradiation diameter of 6.5 (Φ). The determination irradiation conditions are, for example, conditions for performing laser irradiation at a spot (fixed point) to determine the internal state (thermal conduction, phase transformation, melting) of the material of the stainless steel workpiece W on the basis of the temperature characteristics.

Here, the reason for setting the determination irradiation conditions in the second embodiment as described above to determine the internal characteristics of the stainless steel workpiece W is as follows.

That is, through the fourth examination, it has been found that by evaluating the thermal conductivity, phase transformation, and melting condition of the material from the behavior of temperature change, it is possible to determine the quality of the material processability (cutting ability) of the stainless steel workpiece W. To evaluate the thermal conductivity of solids, when the energy density of the laser irradiation is too high, the workpiece will melt instantaneously and the laser will penetrate, so it is essential to analyze the temporal change in temperature within the temperature range where the material does not melt, and depending on the conditions for the material and the like, it is also necessary to analyze the temporal change in temperature within the temperature range where the laser does not penetrate even if the material melts.

Even in the case of stainless steel, to evaluate the material-specific material characteristics (internal characteristics) such as thermal conduction of the material, phase transformation, and melting, it has already been stated in the first embodiment that evaluating the cooling temperature when the laser irradiation is turned off yields results that strongly reflect the internal characteristics such as thermal conductivity of the material. That is, the behavior of temperature change due to heating by laser irradiation is influenced not only by thermal conductivity but also by factors such as the laser absorption rate dependent on the surface condition of the material, making it unsuitable for evaluating the internal characteristics, so the evaluation is performed to focus on cooling temperature.

From this, the energy density of the laser irradiation was set as described above, and adjustments were made so that the heating time and cooling time would be in a proper balance to evaluate the temporal change in the cooling reaching temperature. Specifically, the heating time was adjusted to 75 ms and the cooling time to 25 ms in one cycle (100 ms) of laser irradiation, and the assist gas was set to 0.01 (MPa) for the above-described purpose.

From the above views, the present applicant set the determination criterion (first threshold) for determining the internal characteristics of the stainless steel workpiece W, for example, to determine whether the temperature rise value of the cooling reaching temperature during the period (determination period) from 4 seconds to 8 seconds after the start of laser irradiation by repeated heating and cooling was less than 80°C, and evaluated the magnitude of thermal conduction. In addition, the determination criteria (second threshold, third threshold) were set, for example, to determine whether the cooling reaching temperature measured 8 seconds (determination point) after the start of laser irradiation was less than 400°C or equal to or greater than 820°C, and the magnitude of phase transformation and the melting condition were evaluated. Note that it is also possible to evaluate, for example, the magnitude of the solid-liquid coexistence temperature region based on the fluctuation of temperature rise at 1 ms intervals of the cooling reaching temperature in a period from 4 seconds to 8 seconds after the start of laser irradiation. The determination criteria are not limited to these.

For example, the determination criteria may also be compared with the feature information obtained by, after performing laser irradiation up to a temperature of 1500°C to perform spot (fixed point) heating, turning off the laser irradiation to start cooling, and extracting the inflection point during cooling, the cooling rate, and the like. By comparing this feature information with the determination criteria, it is also possible to evaluate the internal characteristics comparatively and determine the magnitude of the dross to determine the processability. Note that the reference information (determination criteria) can be changed and set as appropriate, as described above.

### [Processing Flow of Processability Determination Device]

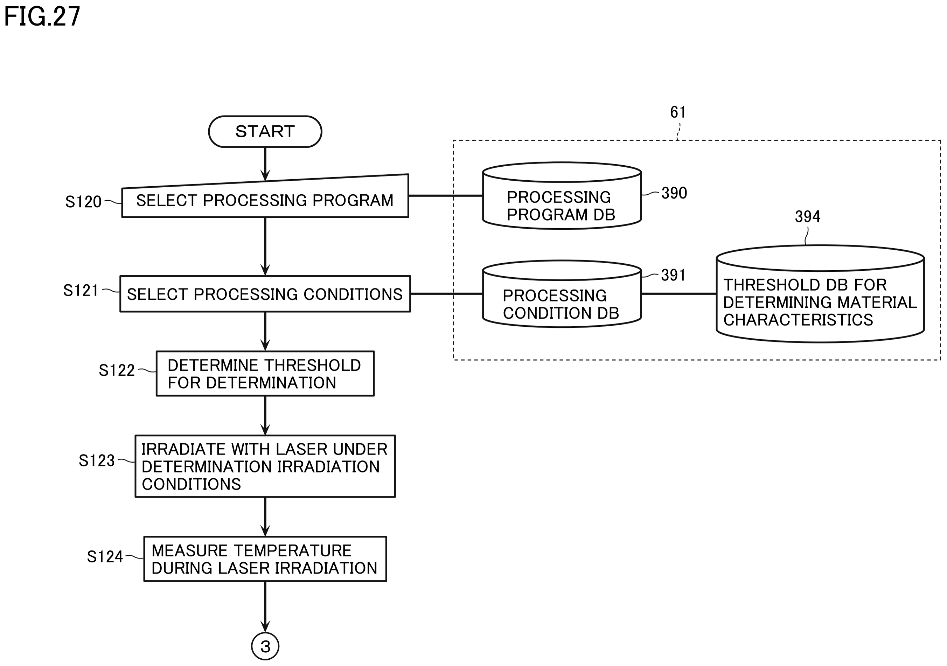

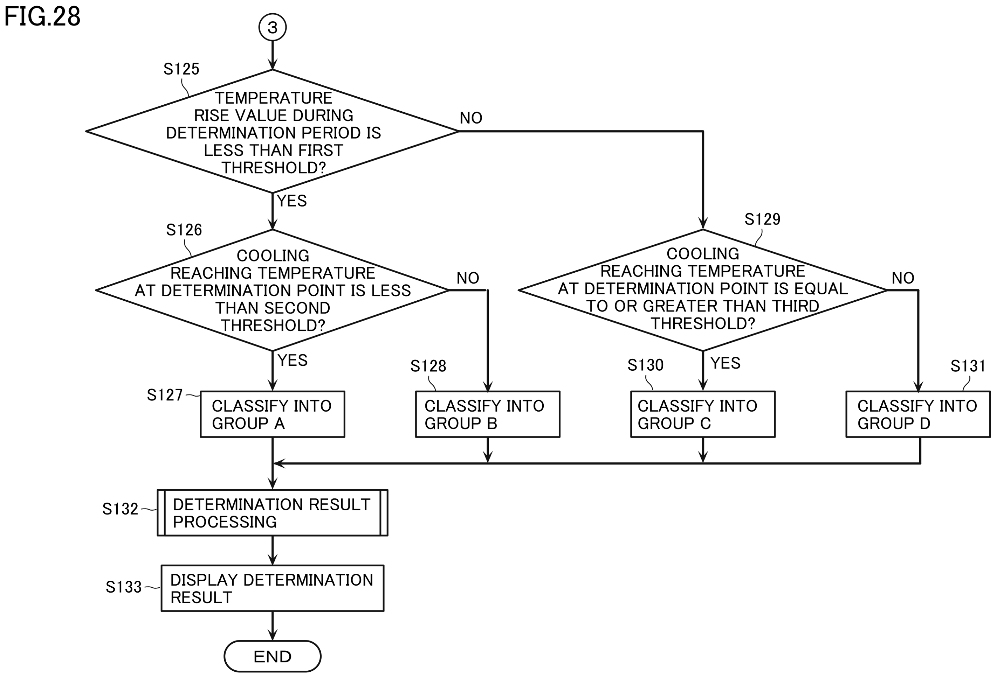

Figures 27 and 28 each are a flowchart illustrating another example of a processability determination processing flow for stainless steel in the processability determination device.

As illustrated in Figure 27, when the processability determination processing is started in the laser processing device 100A, first, a processing program necessary for the control unit 64 is selected and read from a processing program database (DB) 390 in the storage unit 61 in the NC device 60 (step S120).

Next, the processing conditions selected by the processing program are read from a processing condition database (DB) 391 in the storage unit 61 (step S121). Along with this, in step S121, the threshold (determination criterion) for determining the material characteristics (internal characteristics) of the stainless steel workpiece W to which the processing conditions are applied is loaded from a threshold database (DB) 394 for determining the material characteristics in the storage unit 61 and set in each of the control unit 64 and the arithmetic calculation processing unit 63.

In addition, in the arithmetic calculation processing unit 63, the thresholds for determination (first to third thresholds) are determined (step S122). Then, under the determination irradiation conditions for determining the internal characteristics, the workpiece W is irradiated with the laser beams LB (step S123), and the temperature based on the infrared rays of the radiation light during the laser irradiation is measured by the infrared ray sensor 30 (step S124).

Subsequently, the arithmetic calculation processing unit 63 inputs the time-series data of the temperature measured in step S124 described above, and extracts the feature information indicating the temporal change in the temperature of the stainless steel workpiece W. Then, the determination unit 66A compares the extracted feature information with the multiple thresholds (first to third thresholds) set for determining the internal characteristics, and on the basis of the combinations of the respective comparison results, performs the grouping (classification) of the material of the workpiece W and determines the processability (cutting properties).

That is, as illustrated in Figure 28, first, it is determined whether or not the temperature rise value during the determination period from 4 seconds to 8 seconds after the start of laser irradiation is less than the first threshold (80°C) (step S125). If it is determined in step S125 that the temperature rise value during the determination period is less than the first threshold (YES in step S125), it is further determined whether or not the cooling reaching temperature measured 8 seconds (determination point) after the start of laser irradiation is less than the second threshold (400°C) (step S126).

If it is determined in step S126 that the cooling reaching temperature at the determination point is less than the second threshold (YES in step S126), the workpiece W is classified into the group A (step S127), and it is determined that the material characteristics are prone to dross formation and show not good cutting properties. If it is determined in step S126 that the cooling reaching temperature at the determination point is equal to or greater than the second threshold (NO in step S126), the workpiece W is classified into the group B (step S128), and it is determined that the material characteristics are prone to dross formation and show not good cutting capabilities.

On the other hand, if it is determined in step S125 described above that the temperature rise value during the determination period is equal to or greater than the first threshold (NO in step S125), it is further determined whether or not the cooling reaching temperature measured 8 seconds (determination point) after the start of laser irradiation is equal to or greater than the third threshold (820°C) (step S129).

If it is determined in step S129 that the cooling reaching temperature at the determination point is equal to or greater than the third threshold (YES in step S129), the workpiece W is classified into the group C (step S130), and it is determined that the material characteristics are prone to dross formation and show not good cutting properties. Note that the groups A, B, and C are all prone to dross formation, but since the material characteristics differ for each material, the processing conditions for laser cutting can be adjusted separately for each group.

If it is determined in step S129 that the cooling reaching temperature at the determination point is less than the third threshold (NO in step S129), the workpiece W is classified into the group D (step S131), and it is determined that the material characteristics show small dross formation and good cutting properties. Note that the group D is a material having the material characteristics showing small dross formation, so the processing conditions for laser cutting can be adjusted to the standard conditions.

Then, according to the determination results of the processability of the workpiece W classified into the group A to D at steps S127, S128, S130, S131, the determination result processing is performed (step S132). In the determination result processing, for example, according to the classified group, calculations such as modifying elements (modifiable parameters) for the processing conditions read and selected from the processing condition DB 391 in the storage unit 61 in step S121 described above are performed, and information for reporting by which the modifying elements can be suggested to the operator is generated.

The result information of the determination result processing is reported to the operator by being displayed on the display unit 62 by the reporting unit 67 and so on along with the above-described determination result (step S133), and a series of processes according to this flowchart is ended. As described above, also in the laser processing device 100A according to the second embodiment, it is possible to achieve the similar effects to those in the first embodiment, allowing the operator to easily determine whether to perform processing under the pre-set processing conditions or to change to processing conditions suitable for the workpiece, thereby making it possible to reduce the processing defects.

### [Third Embodiment]

Next, a third embodiment will be described. In the third embodiment, the determination of processability when processing aluminum alloy as the workpiece W will be described.

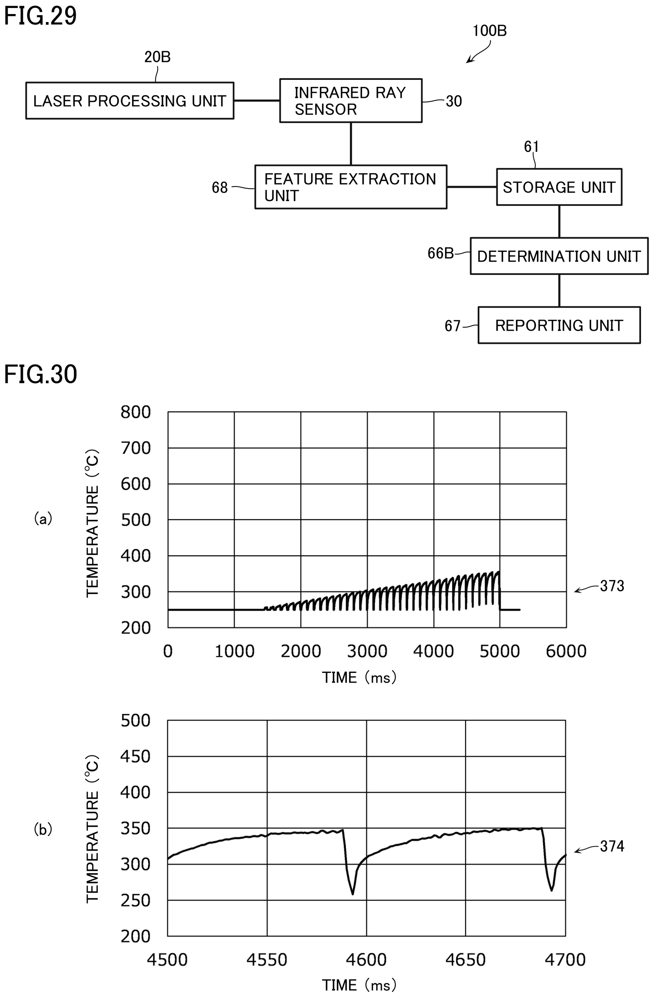

Figure 29 is a block diagram illustrating a basic configuration of a processability determination device according to the third embodiment of the present invention.

A laser processing device 100B according to the third embodiment includes, for example, as illustrated in Figure 29, a laser processing unit 20B capable of executing a processing process of irradiating a workpiece W with laser beams LB under processing irradiation conditions to process the workpiece W, and a processability determination process of irradiating the workpiece W with the laser beams LB under determination irradiation conditions that the laser beams LB do not penetrate a raw material of the workpiece W to determine processability of the workpiece W, an infrared ray sensor (measurement unit) 30 configured to measure infrared ray intensity of radiation light generated when the workpiece W is irradiated with the laser beams LB under the determination irradiation conditions, a feature extraction unit 68 configured to extract feature information indicating temporal changes in temperature of the workpiece W on the basis of time-series data of the infrared ray intensity measured by the infrared ray sensor (measurement unit) 30, a determination unit 66B configured to determine the processability of the workpiece W when the workpiece W is processed under preset processing conditions by the laser processing unit 20B on the basis of the extracted feature information and reference information for determining the processability of the workpiece W that has been pre-recorded, a reporting unit 67 configured to report a determination result determined by the determination unit 66B, and a storage unit 61 configured to store the feature information and the reference information.

The workpiece W in the third embodiment contains aluminum (Al) as the main component when it is, for example, an aluminum alloy. The workpiece W contains various alloy elements and inevitably mixed impurities according to its application, in addition to this main component.

The internal characteristics of an aluminum alloy workpiece W specifically refer to the magnitude of the temperature rise during laser irradiation by the internal components of the workpiece W. The aluminum alloy is difficult to increase its temperature due to its low laser absorption rate, but the laser absorption rate is changed by the amount of alloying elements and manufacturing processes such as heat treatment. In general, as the amount of alloying elements increases, the laser absorption rate becomes higher, making it easier to increase the temperature. Then, materials that are easier to increase their temperatures tend to have a larger amount of molten material, resulting in a stronger tendency for large dross formation.

Therefore, a fifth examination was conducted to analyze the internal characteristics of the magnitude of the temperature rise of the aluminum alloy workpiece W. In the fifth examination, first, since an aluminum alloy had a low laser absorption rate, the raw material surface of the workpiece W was processed by removing the raw material surface by a predetermined depth so that the surface roughness reached a predetermined state using a predetermined laser power (surface modification). Then, the internal characteristics such as differences in heat conduction and melting point were analyzed by repeatedly heating and cooling the inside of the raw material of the workpiece W with spot irradiation of laser beams LB. Note that the processing conditions for laser cutting processing are the same as those in the fourth examination.

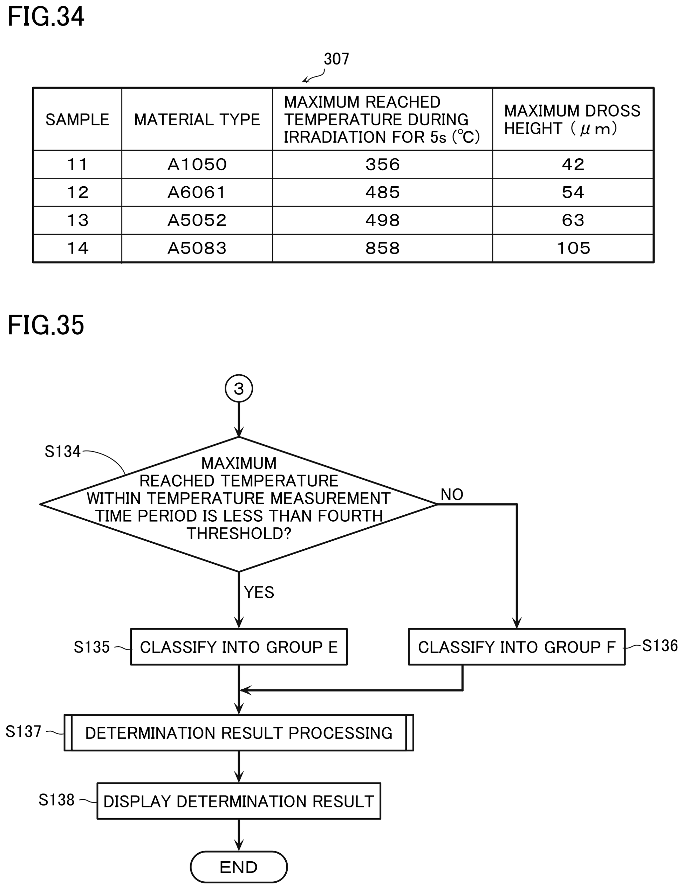

Figures 30 to 33 each are a graph showing the relationship between temperature and time when heating and cooling are repeatedly applied to a workpiece. Figure 34 is a result table showing, for each workpiece, examination results of features of temporal changes in maximum reached temperature caused by heating and the magnitude of dross. As shown in the result table 307 of Figure 34, samples 11 to 14 as workpieces W are sheet metals made of an aluminum alloy and each having a thickness of 6 mm, and the respective material grades are A1050, A6061, A5052, and A6061. Figure 34 also shows a maximum reached temperature and a maximum dross height for each of the samples 11 to 14.

Figure 30 shows the relationship between the above-described temperature and time for the sample 11 (A1050). Figure 30(a) shows a temperature waveform 373 obtained by measuring the sample 11 with the infrared ray sensor 30 and converting the time-series data of the infrared ray intensity output from the infrared ray sensor 30 into the time-series data of the temperature. In Figure 30(a), the vertical axis represents the temperature (°C), and the horizontal axis represents the time (milliseconds: ms).

In the fifth examination, as the determination irradiation conditions, the laser power of the laser beams LB with which the inside of the raw material of the workpiece W having a thickness of 6 mm was spot irradiated was set to 2000 W, frequency to 10 Hz, and duty to 95%, and heating was repeatedly performed 10 times per second. Figure 30(b) is a graph showing a temperature waveform 374 corresponding to two cycles of the temperature waveform 373 enlargedly shown by rescaling the time axis in Figure 30A in milliseconds.

As illustrated in Figures 30(a) and (b), it can be seen that within the temperature measurement time period after the irradiation start of the laser beams LB (time period from the start of laser irradiation to 5 seconds), the temperature waveforms 373 and 374 of the workpiece W fluctuate finely (repetition of heat generation and heat dissipation) between approximately 250°C and approximately 350°C over time by multiple cycles of laser irradiation, and the temporal transition of the maximum reached temperature by heating within the temperature measurement time period can be extracted as the feature information.

Then, the feature information representing the temporal transition of the maximum reached temperature due to heating indicated by the temperature waveforms 373 and 374 within the temperature measurement time period shows the magnitude of thermal conduction of the workpiece W and the temperature change caused by melting (degree of temperature rise), representing the material characteristics that affect the cutting quality of laser cutting, and can be used for the subsequent determination evaluations. On the basis of such feature information, the maximum reached temperature within the temperature measurement time period (predetermined time period) for 5 seconds from the start of laser irradiation was set as a determination criterion for determining the cutting properties (fourth threshold) based on the internal characteristics of the material of the workpiece W.

In other words, the present applicant has found that the higher the maximum reached temperature is, the more easily it reaches the melting temperature during laser cutting, resulting in a larger amount of melting and easier formation of dross. On the basis of this, the fourth threshold for determining the maximum reached temperature for 5 seconds (within the temperature measurement time period) from the start of laser irradiation was set to 550°C, and those with a maximum reached temperature exceeding 550°C within the temperature measurement time period were evaluated as having a large (high) maximum dross height.

Accordingly, materials with a maximum reached temperature within the temperature measurement time period which became less than the fourth threshold (550°C) were classified into the group E as having small dross formation, while materials with a maximum reached temperature of equal to or more than the fourth threshold (550°C) were classified into the group F as having large dross formation. Similarly to the fourth examination, the cutting properties (processability) of the workpiece W was evaluated on the basis of the magnitude of the dross (dross height). In addition, the evaluation of the magnitude of the dross is the same as in the fourth examination. In the fifth examination, it has been found that materials with a maximum reached temperature of less than 550°C within the temperature measurement time period have good cutting properties (processability). Accordingly, the group E has good cutting properties, while the group F has not good cutting properties.

As illustrated in Figure 30(a), for the sample 11, the maximum reached temperature for 5 seconds from the start of laser irradiation was 356°C, and the maximum dross height was 42 µm (see Figure 34). Accordingly, since the sample 11 has a maximum reached temperature of less than 550°C within the temperature measurement time period, a small maximum dross height, and a small temperature rise, and the sample 11 can be said to be the material corresponding to the above-described group E. This is considered to be due to the high thermal conductivity, and since the temperature continues to rise without stagnation during laser irradiation, it is considered that the surface of the raw material of the sample 11 is not melted.

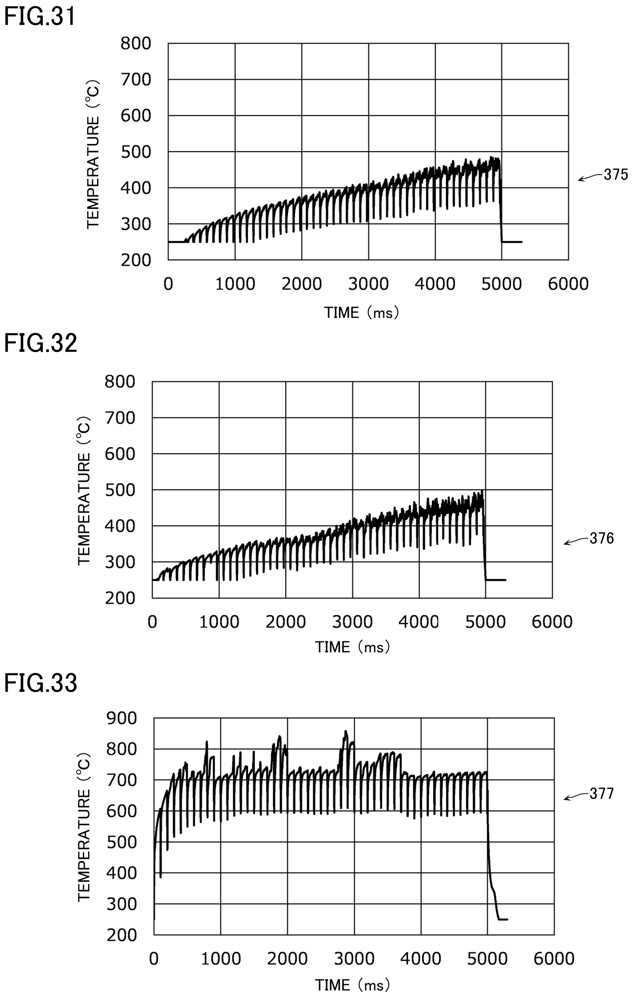

Figure 31 shows the relationship between the above-described temperature and time for the sample 12 (A6061). Figure 31 shows a temperature waveform 375 obtained by measuring the sample 12 with the infrared ray sensor 30 and converting the time-series data of the infrared ray intensity output from the infrared ray sensor 30 into the time-series data of the temperature. The processing conditions and the determination irradiation conditions are the same as those for the sample 11.

As illustrated in Figure 31, for the sample 12, the maximum reached temperature for 5 seconds from the start of laser irradiation was 485°C, and the maximum dross height was 54 µm (see Figure 34). The sample 12 is a material that is an Al-Mg-Si alloy, which provides high strength and is excellent in terms of thermal conductivity. Accordingly, the sample 12 is a material with a maximum reached temperature of less than 550°C within the temperature measurement time period, a small maximum dross height, and excellent thermal conductivity, making it difficult to increase its temperature similarly to the sample 11, and can be said to be a material corresponding to the above-described group E. Since the temperature of sample 12 continues to rise during laser irradiation, it is considered that the raw material surface is not melted.

Figure 32 shows the relationship between the above-described temperature and time for the sample 13 (A5052). Figure 32 shows a temperature waveform 376 obtained by measuring the sample 13 with the infrared ray sensor 30 and converting the time-series data of the infrared ray intensity output from the infrared ray sensor 30 into the time-series data of the temperature. The processing conditions and the determination irradiation conditions are the same as those for the samples 11 and 12.

As illustrated in Figure 32, for the sample 13, the maximum reached temperature for 5 seconds from the start of laser irradiation was 498°C, and the maximum dross height was 63 µm (see Figure 34). The sample 13 is a material that is an Al-Mg alloy, which contains a high amount of Mg, and has high strength obtained due to the solid solution hardening of Mg and relatively low thermal conductivity. Accordingly, since the sample 13 has a maximum reached temperature of less than 550°C within the measurement temperature time period, and a small maximum dross height, the sample 13 can be said to be the material corresponding to the above-described group E. Since the temperature of sample 13 continues to rise during laser irradiation, it is considered that the raw material surface is not melted.

Figure 33 shows the relationship between the above-described temperature and time for the sample 14 (A5083). Figure 33 shows a temperature waveform 377 obtained by measuring the sample 14 with the infrared ray sensor 30 and converting the time-series data of the infrared ray intensity output from the infrared ray sensor 30 into the time-series data of the temperature. The processing conditions and the determination irradiation conditions are the same as those for the samples 11 to 13.

As illustrated in Figure 33, for the sample 14, the maximum reached temperature for 5 seconds from the start of laser irradiation was 858°C, and the maximum dross height was 105 µm (see Figure 34). The sample 14 is a material that contains more Mg than the sample 13 and is easier to increase its temperature than the other samples 11 to 13. Accordingly, since the sample 14 has a maximum reached temperature of 550°C or more within the temperature measurement time period, and a large maximum dross height, the sample 14 can be said to be a material corresponding to the above-described group F. Since the temperature rise of the sample 14 stagnates 0.5 seconds after the start of laser irradiation, it is considered that the raw material surface has been melted, causing temperature stagnation due to latent heat.

From the above perspective, the processability (dross) of the aluminum alloy workpiece W is greatly dependent on the internal characteristics such as the magnitude of thermal conduction of the workpiece W, and melting, and it has been proven that the processability (dross) can be determined on the basis of the temperature based on the infrared ray intensity similarly to the case of stainless steel. Therefore, the present applicant has set the reference information (determination criteria) for determining the processability of the aluminum alloy workpiece W as described above, taking into account the results of the fifth examination conducted as mentioned above.

In the determination of the processability of the aluminum alloy workpiece W, specifically, in the laser processing device 100B, the laser processing unit 20B repeatedly irradiates the workpiece W with the laser beams LB under the determination irradiation conditions in the processability determination process (for example, spot irradiation). When the workpiece W is made of aluminum alloy, for example, the reference information stored in the storage unit 61 includes the determination criteria based on the maximum reached temperature of the workpiece W within a predetermined time period (temperature measurement time period) (for 5 seconds) from the irradiation start of laser beams LB.

The determination unit 66B determines the processability of the workpiece W on the basis of whether or not the maximum reached temperature of the workpiece W included in the feature information stored in the storage unit 61 meets the determination criteria.

In order to reproducibly determine the internal characteristics of the workpiece W, it is preferable that the determination irradiation conditions include the first irradiation conditions and the second irradiation conditions. Before irradiating the inside of the raw material of the workpiece W with the laser beams LB under the first irradiation conditions, the laser processing unit 20B performs the surface modification of the workpiece W by irradiating the raw material surface of the workpiece W with the laser beams LB under the second irradiation conditions. Here, the surface modification of the workpiece W is performed to roughen the surface of the workpiece W to an average depth of 0 mm to 0.02 mm and an average roughness of 5 µm to 10 µm by the irradiation of the laser beams LB under the second irradiation conditions, for example.

Specifically, the standard processing conditions (standard conditions) for laser cutting processing are set with each parameter item such as laser power of 8500 (W), processing speed of 6300 (mm/min), (pulse) frequency of 2000 (Hz), (pulse) duty (pulse width) of 100 (%), gas type of N₂, gas pressure of 1.6 (MPa), nozzle gap of 0.3 (mm), and ACL of 120 according to the thickness of the aluminum alloy workpiece W.

In addition, the first irradiation conditions in the third embodiment for the laser beams LB on the aluminum alloy workpiece W are set with each parameter item such as laser power of 2000 (W), processing speed of 0 (mm/min), (pulse) frequency of 10 (Hz), (pulse) duty (pulse width) of 95 (%), gas pressure of 0.04 (MPa), nozzle gap of 50 (mm), nozzle of D7.0AL, gas type of O₂, lens focal length of 190 (mm), ACL of 140, B-axis of 25 (mm), and laser irradiation diameter of 6.5 (Φ). The first irradiation conditions are, for example, conditions for performing laser irradiation at a spot (fixed point) to determine the internal state (thermal conduction, melting) of the material of the aluminum alloy workpiece W on the basis of the temperature characteristics.

On the other hand, the second irradiation conditions in the third embodiment for the laser beams LB are conditions that are set with each parameter item such as laser power of 650 (W), processing speed of 10000 (mm/min), (pulse) frequency of 5000 (Hz), (pulse) duty (pulse width) of 35 (%), gas pressure of 0.3 (MPa), nozzle gap of 8 (mm), nozzle of D7.0AL, gas type of O₂, and lens focal length of 190 (mm) in a state in which a focal position is located on the raw material surface, and are for performing the surface modification as described above.

The reason for setting the determination irradiation conditions (first irradiation conditions) in the third embodiment as described above to determine the internal characteristics of the aluminum alloy workpiece W is as follows.

That is, through the fifth examination, it has been found that by evaluating the thermal conductivity and melting condition of the material from the behavior of temperature change, it is possible to determine the quality of the material processability (cutting ability) of the aluminum alloy workpiece W. In order to evaluate the thermal conductivity and melting condition of the solid, it is necessary to adjust the laser irradiation conditions to a range that the laser does not penetrate even if the raw material surface of the material is melted.

In the case of aluminum alloy, it has been found that it is easier to evaluate the internal characteristics of the material by evaluating the maximum reached temperature within the temperature measurement time period of heating by laser irradiation to evaluate the material specific material characteristics (internal characteristics) such as thermal conduction and melting of the material. The internal characteristics of the material can also be evaluated even at the reached temperature during cooling, but since the aluminum alloy is a material with extremely high thermal conduction, it generally has a fast cooling rate and a low cooling reaching temperature, making it difficult to reflect the effects of material characteristics. In contrast, it has been found that evaluating at the reached temperature by heating yields results that strongly reflect the internal characteristics such as the thermal conductivity of the material.

From this, in order to suppress fluctuations in laser absorption rate due to the condition of the laser irradiation surface in the material, the surface modification as described above was performed before determining the internal characteristics, and adjustments were made so that the heating time and cooling time would be in a proper balance to evaluate the temporal changes in the reached temperature due to heating. That is, the heating time was set to 95 ms and the cooling time to 5 ms in one cycle of laser irradiation (100 ms), and the assist gas was set to 0.04 (MPa) for the above-described purpose.

From the above views, the present applicant set the determination criterion (fourth threshold) for determining the internal characteristics of the aluminum alloy workpiece W, for example, to determine whether the maximum reached temperature for 5 seconds (within the temperature measurement time period) from the start of laser irradiation by repeated heating and cooling was less than 550°C, and evaluated the ease of melting due to laser irradiation. Note that the determination criteria are not limited to this.

For example, the determination criteria may be set on the basis of the time when the heating temperature reaches a predetermined reference temperature (for example, 500°C) as a feature. By comparing the reached time of the heating temperature with the determination criteria, the ease of melting can be comparatively evaluated, and the magnitude of the dross can be determined to determine the processability. In this case, the reference information (determination criteria) can also be appropriately changed and set as described above.

### [Processing Flow for Processability Determination]

Figure 35 is a flowchart showing a part of another example of a processability determination processing flow for an aluminum alloy in the processability determination device.

In this processability determination process, the surface modification treatment as described above is performed between steps S122 and S123 illustrated in Figure 27 by the laser processing unit 20B. Also, the threshold (fourth threshold) for determining the internal characteristics set in the control unit 64, etc., is different from that in the second embodiment. Furthermore, the processing conditions and the determination irradiation conditions (first irradiation conditions, second irradiation conditions) are different from those (for stainless steel) in the second embodiment. Except for the differences described above, the processability determination process can be performed similarly to the case of stainless steel. Accordingly, here, the different processes from above-described step S124 onwards will be mainly described.

After measuring the temperature based on the infrared ray intensity in step S124 described above, as illustrated in Figure 35, the determination unit 66B determines whether or not the maximum reached temperature within the temperature measurement time period for five seconds from the start of laser irradiation is less than the fourth threshold (550°C) (step S134). If it is determined in step S133 that the maximum reached temperature within the temperature measurement time period is less than the fourth threshold (YES in step S133), the workpiece W is classified into the group E (step S135), and the material characteristics are determined to be such that dross is unlikely to occur and cutting properties are good.

On the other hand, if it is determined in step S133 that the maximum reached temperature within the temperature measurement time period is equal to or greater than the fourth threshold (NO in step S133), the workpiece W is classified into the group F (step S136), and the material characteristics are determined to be such that dross is likely to occur and cutting properties are not good.

Then, according to the processability determination results of the workpiece W classified into the groups E, F in steps S135, S136, the determination result processing is performed similarly to step S132 described above (step S137), and the result information is displayed along with the above-described determination results on the display unit 62 (step S138) and so on to report it to the operator, and a series of processes according to this flowchart is ended.

As described above, also in the laser processing device 100B according to the third embodiment, it is possible to achieve the similar effects to those in the first and second embodiments, allowing the operator to easily determine whether to perform processing under the pre-set processing conditions or to change to processing conditions suitable for the workpiece, thereby making it possible to reduce the processing defects.

### [Modifications]

The foregoing describes the preferred embodiments of the present invention, but the technical scope of the present invention is not limited to the scope indicated in the embodiment described above. Various modifications or improvements can be added to the embodiments described above.

For example, in the first embodiment described above, the determination result of the combination of the surface properties and internal characteristics of the material of the workpiece W was explained to determine the processability by a binary choice of "good" or "defective", but it is not limited to this. For example, the determination of the surface properties and internal characteristics of the material of the workpiece W may be performed by multiple stages of evaluation such as "O", "△", and "×" based on multiple thresholds, and the processability may be determined more finely on the basis of these multiple stage evaluations.

In addition, in the second embodiment described above, the determination of the material characteristics (internal characteristics) of the stainless steel workpiece W was performed using the first to third threshold determination criteria with respect to the temperature rise value during the determination period and the cooling reaching temperature at the determination point, while in the third embodiment, the determination of the internal characteristics of the aluminum alloy workpiece W was performed using the fourth threshold determination criteria with respect to the maximum reached temperature within the temperature measurement time period, but this is not limited to these. For example, the determination of the internal characteristics of the workpiece W can be performed by setting more (multiple stages of) thresholds for more features, allowing for finer classification of material characteristics.

The foregoing describes several embodiments of the present invention, but these embodiments are presented as examples and are not intended to limit the scope of the invention. These novel embodiments can be carried out in various other forms, and a variety of omissions, substitutions, and alterations are possible within a scope that does not depart from the gist of the invention. These embodiments and modifications thereof are included in the scope and gist of the invention, and are also included in the scope of the invention as described in the claims and their equivalents.

### Reference Signs List

11: Processing table
20: Laser processing unit
22: Laser processing head
30: Infrared ray sensor
60: NC device
100: Laser processing device
W: Workpiece

## Claims

1. A processability determination device, comprising:
a laser processing unit capable of executing a processing process of irradiating a workpiece with laser beams under processing irradiation conditions to process the workpiece, and a processability determination process of irradiating the workpiece with the laser beams under determination irradiation conditions that do not exceed a melting point of a raw material of the workpiece to determine processability of the workpiece;
a measurement unit configured to measure infrared ray intensity of radiation light generated when the workpiece is irradiated with the laser beams under the determination irradiation conditions;
a feature extraction unit configured to extract feature information indicating a temporal or positional change in a temperature of the workpiece on the basis of time-series data of the infrared ray intensity measured by the measurement unit;
a determination unit configured to determine the processability of the workpiece when the workpiece is processed under preset processing conditions by the laser processing unit on the basis of the extracted feature information and reference information for determining the processability of the workpiece that has been pre-recorded; and
a reporting unit configured to report a determination result determined by the determination unit.

2. The processability determination device according to claim 1, wherein
the laser processing unit repeatedly irradiates an inside of the raw material of the workpiece with the laser beams under the determination irradiation conditions in the processability determination process,
the feature extraction unit extracts the temporal change in the temperature of the workpiece as feature information on the basis of the time-series data of the infrared ray intensity measured by the measurement unit,
the reference information includes a determination criterion indicating a degree of temperature rise of the workpiece, and
the determination unit determines the processability of the workpiece on the basis of whether or not the temporal change in the temperature of the workpiece included in the feature information is in a state of temperature rise that deviates from the determination criterion.

3. The processability determination device according to claim 1, wherein
the laser processing unit irradiates a surface of the raw material of the workpiece with the laser beams while moving an irradiation position under the determination irradiation conditions in the processability determination process,
the feature extraction unit extracts the positional change in the temperature of the workpiece as feature information on the basis of the time-series data of the infrared ray intensity measured by the measurement unit,
the reference information includes a determination criterion based on at least one of a reference temperature range and a variation in temperature of the workpiece, and
the determination unit determines the processability of the workpiece on the basis of whether the positional change in the temperature of the workpiece included in the feature information meets the determination criterion.

4. The processability determination device according to claim 1, wherein
the determination irradiation conditions include first irradiation conditions and second irradiation conditions,
the laser processing unit irradiates a surface of the raw material of the workpiece with the laser beams while moving an irradiation position under the first irradiation conditions in the processability determination process, and repeatedly irradiates an inside of the raw material of the workpiece with the laser beams under the second irradiation conditions,
the measurement unit measures a first infrared ray intensity of the radiation light generated when the workpiece is irradiated with the laser beams under the first irradiation conditions, and a second infrared ray intensity of the radiation light generated when the workpiece is irradiated with the laser beams under the second irradiation conditions,
the feature extraction unit extracts first feature information indicating the positional change in the temperature of the workpiece on the basis of time-series data of the first infrared ray intensity measured by the measurement unit, and extracts second feature information indicating the temporal change in the temperature of the workpiece on the basis of time-series data of the second infrared ray intensity measured by the measurement unit, and
the determination unit compares the first feature information with a first determination criterion included in the reference information, and compares the second feature information with a second determination criterion included in the reference information, and determines the processability of the workpiece on the basis of a combination of comparison results.

5. The processability determination device according to claim 4, wherein
the laser processing unit performs surface modification of the workpiece by irradiating the surface of the raw material of the workpiece with the laser beams under third irradiation conditions before irradiating the inside of the raw material of the workpiece with the laser beams under the second irradiation conditions.

6. The processability determination device according to claim 5, wherein
in the surface modification, the surface of the raw material of the workpiece is removed to an average depth of 0.05 mm to 1.5 mm and an average roughness of 10 µm or less by irradiating with the laser beams under the third irradiation conditions.

7. The processability determination device according to claim 1, wherein
the measurement unit measures the infrared ray intensity in a wavelength band of 1600 nm or more.

8. The processability determination device according to claim 5, wherein
laser powers under the first irradiation conditions, the second irradiation conditions, and the third irradiation conditions are smaller than laser power under the processing irradiation conditions,
the laser powers under the first irradiation conditions and the second irradiation conditions are smaller than the laser power under the third irradiation conditions, and
the laser power under the first irradiation conditions is smaller than the laser power under the second irradiation conditions.

9. The processability determination device according to claim 4, wherein
an energy density of the laser beams with which the workpiece is irradiated under the first irradiation conditions is 1 W/mm² or more and less than 5 W/mm², and
an energy density of the laser beams with which the workpiece is irradiated under the second irradiation conditions is 5 W/mm² or more and 10 W/mm² or less.

10. The processability determination device according to claim 4, wherein
the first determination criterion includes information regarding at least one of a reference temperature range and a variation in temperature of the workpiece, and
the second determination criterion includes information indicating a degree of temperature rise of the workpiece.

11. A processability determination method, comprising:
irradiating, by a laser processing unit, a workpiece with laser beams under determination irradiation conditions that do not exceed a melting point of a raw material of the workpiece;
measuring, by a measurement unit, infrared ray intensity of radiation light generated when the workpiece is irradiated with the laser beams under the determination irradiation conditions;
extracting, by a feature extraction unit, feature information indicating a temporal or positional change in a temperature of the workpiece on the basis of time-series data of the infrared ray intensity measured by the measurement unit before processing the workpiece;
determining, by a determination unit, processability of the workpiece when the workpiece is processed under preset processing conditions by the laser processing unit on the basis of the extracted feature information and reference information for determining the processability of the workpiece that has been pre-recorded; and
reporting, by a reporting unit, a determination result determined by the determination unit.

12. The processability determination method according to claim 11, wherein
in the irradiating, the laser processing unit repeatedly irradiates an inside of the raw material of the workpiece with the laser beams under the determination irradiation conditions,
in the extracting, the temporal change in the temperature of the workpiece is extracted as feature information on the basis of the time-series data of the infrared ray intensity measured by the measurement unit,
as the reference information, a determination criterion indicating a degree of temperature rise of the workpiece is pre-recorded, and
in the determining, the processability of the workpiece is determined on the basis of whether or not the temporal change in the temperature of the workpiece included in the feature information is in a state of temperature rise that deviates from the determination criterion.

13. The processability determination method according to claim 11, wherein
in the irradiating, the laser processing unit irradiates a surface of the raw material of the workpiece with the laser beams while moving an irradiation position under the determination irradiation conditions,
in the extracting, the positional change in the temperature of the workpiece is extracted as feature information on the basis of the time-series data of the infrared ray intensity measured by the measurement unit,
as the reference information, a determination criterion based on at least one of a reference temperature range and a variation in temperature of the workpiece is pre-recorded, and
in the determining, the processability of the workpiece is determined on the basis of whether the positional change in the temperature of the workpiece included in the feature information meets the determination criterion.

14. The processability determination method according to claim 11, wherein
the determination irradiation conditions include first irradiation conditions and second irradiation conditions,
in the irradiating, a surface of the raw material of the workpiece is irradiated with the laser beams while moving an irradiation position under the first irradiation conditions, and an inside of the raw material of the workpiece is repeatedly irradiated with the laser beams under the second irradiation conditions,
in the measuring, the measurement unit measures a first infrared ray intensity of radiation light generated when the workpiece is irradiated with the laser beams under the first irradiation conditions, and a second infrared ray intensity of radiation light generated when the workpiece is irradiated with the laser beams under the second irradiation conditions,
in the extracting, the feature extraction unit extracts first feature information indicating the positional change in the temperature of the workpiece on the basis of time-series data of the first infrared ray intensity measured by the measurement unit, and extracts second feature information indicating the temporal change in the temperature of the workpiece on the basis of time-series data of the second infrared ray intensity measured by the measurement unit, and
in the determining, the first feature information is compared with a first determination criterion included in the reference information, and the second feature information is compared with a second determination criterion included in the reference information, and the processability of the workpiece is determined on the basis of a combination of comparison results.

15. A processability determination program causing a computer to execute:
irradiating, by a laser processing unit, a workpiece with laser beams under determination irradiation conditions that do not exceed a melting point of a raw material of the workpiece;
measuring, by a measurement unit, infrared ray intensity of radiation light generated when the workpiece is irradiated with the laser beams under the determination irradiation conditions;
extracting, by a feature extraction unit, feature information indicating a temporal or positional change in a temperature of the workpiece on the basis of time-series data of the infrared ray intensity measured by the measurement unit before processing the workpiece;
determining, by a determination unit, processability of the workpiece when the workpiece is processed under preset processing conditions by the laser processing unit on the basis of the extracted feature information and reference information for determining the processability of the workpiece that has been pre-recorded; and
reporting, by a reporting unit, a determination result determined by the determination unit.

16. A processability determination device, comprising:
a laser processing unit capable of executing a processing process of irradiating a workpiece with laser beams under processing irradiation conditions to process the workpiece, and a processability determination process of irradiating the workpiece with the laser beams under determination irradiation conditions that the laser beams do not penetrate a raw material of the workpiece to determine processability of the workpiece;
a measurement unit configured to measure infrared ray intensity of radiation light generated when the workpiece is irradiated with the laser beams under the determination irradiation conditions;
a feature extraction unit configured to extract feature information indicating temporal changes in temperature of the workpiece on the basis of time-series data of the infrared ray intensity measured by the measurement unit;
a determination unit configured to determine the processability of the workpiece when the workpiece is processed under preset processing conditions by the laser processing unit on the basis of the extracted feature information and reference information for determining the processability of the workpiece that has been pre-recorded; and
a reporting unit configured to report a determination result determined by the determination unit.

17. The processability determination device according to claim 16, wherein
the laser processing unit repeatedly irradiates the workpiece with the laser beams under the determination irradiation conditions in the processability determination process.

18. The processability determination device according to claim 17, wherein
when the workpiece is made of stainless steel, the reference information includes a determination criterion based on a temperature rise value of the workpiece during a predetermined period after an irradiation start of the laser beams, and a cooling reaching temperature of the workpiece after an elapse of a predetermined time from the irradiation start of laser beams, and
the determination unit determines the processability of the workpiece on the basis of whether or not the temperature rise value of the workpiece and the cooling reaching temperature of the workpiece included in the feature information meet the determination criterion.

19. The processability determination device according to claim 17, wherein
when the workpiece is made of an aluminum alloy, the reference information includes a determination criterion based on a maximum reached temperature of the workpiece within a predetermined time period from an irradiation start of the laser beams, and
the determination unit determines the processability of the workpiece on the basis of whether or not the maximum reached temperature of the workpiece included in the feature information meets the determination criterion.

20. The processability determination device according to claim 19, wherein
the determination irradiation conditions include first irradiation conditions and second irradiation conditions,
the laser processing unit performs surface modification of the workpiece by irradiating a surface of the raw material of the workpiece with the laser beams under the second irradiation conditions before irradiating an inside of the raw material of the workpiece with the laser beams under the first irradiation conditions.

21. The processability determination device according to claim 16, wherein
the measurement unit measures the infrared ray intensity in a wavelength band of 1600 nm or more.

22. A processability determination method, comprising:
irradiating, by a laser processing unit, a workpiece with laser beams under determination irradiation conditions that the laser beams do not penetrate a raw material of the workpiece;
measuring, by a measurement unit, infrared ray intensity of radiation light generated when the workpiece is irradiated with the laser beams under the determination irradiation conditions;
extracting, by a feature extraction unit, feature information indicating temporal changes in temperature of the workpiece on the basis of time-series data of the infrared ray intensity measured by the measurement unit before processing the workpiece;
determining, by a determination unit, processability of the workpiece when the workpiece is processed under preset processing conditions by the laser processing unit on the basis of the extracted feature information and reference information for determining the processability of the workpiece that has been pre-recorded; and
reporting, by a reporting unit, a determination result determined by the determination unit.

23. The processability determination method according to claim 22, wherein
in the irradiating, the laser processing unit repeatedly irradiates the workpiece with the laser beams under the determination irradiation conditions.

24. The processability determination method according to claim 23, wherein
when the workpiece is made of stainless steel,
as the reference information, a determination criterion based on a temperature rise value of the workpiece during a predetermined period after an irradiation start of the laser beams and a cooling reaching temperature of the workpiece after an elapse of a predetermined time from the irradiation start of the laser beams is pre-recorded, and
in the determining, the processibility of the workpiece is determined on the basis of whether or not the temperature rise value of the workpiece and the cooling reaching temperature of the workpiece included in the feature information meet the determination criterion.

25. The processability determination method according to claim 22, wherein
when the workpiece is made of an aluminum alloy,
as the reference information, a determination criterion based on a maximum reached temperature of the workpiece within a predetermined time period from an irradiation start of the laser beams is pre-recorded, and
in the determining, the processability of the workpiece is determined on the basis of whether or not the maximum reached temperature of the workpiece included in the feature information meets the determination criterion.

26. A processability determination program causing a computer to execute:
irradiating, by a laser processing unit, a workpiece with laser beams under determination irradiation conditions that the laser beams do not penetrate a raw material of the workpiece;
measuring, by a measurement unit, infrared ray intensity of radiation light generated when the workpiece is irradiated with the laser beams under the determination irradiation conditions;
extracting, by a feature extraction unit, feature information indicating temporal changes in temperature of the workpiece on the basis of time-series data of the infrared ray intensity measured by the measurement unit before processing the workpiece;
determining, by a determination unit, processability of the workpiece when the workpiece is processed under preset processing conditions by the laser processing unit on the basis of the extracted feature information and reference information for determining the processability of the workpiece that has been pre-recorded; and
reporting, by a reporting unit, a determination result determined by the determination unit.
